(19) **Europäisches Patentamt**
**European Patent Office**
**Office européen des brevets**

(11) **EP 3 734 865 B1**

(12) **EUROPEAN PATENT SPECIFICATION**

(45) Date of publication and mention
of the grant of the patent:
**30.03.2022 Bulletin 2022/13**

(21) Application number: **19171762.8**

(22) Date of filing: **30.04.2019**

(51) International Patent Classification (IPC):
*H04B 17/12* (2015.01)    *H04B 17/21* (2015.01)
*H04B 7/0413* (2017.01)    *H04W 52/16* (2009.01)

(52) Cooperative Patent Classification (CPC):
**H04B 17/12; H04B 7/0617; H04B 17/21;**
H04W 52/16

(54) **BEAMFORMING ANTENNA, MEASUREMENT DEVICE AND METHOD**

STRAHLFORMUNGSANTENNE, MESSVORRICHTUNG UND VERFAHREN

ANTENNE DE FORMATION DE FAISCEAUX, DISPOSITIF DE MESURE ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2020 Bulletin 2020/45**

(73) Proprietor: **Xilinx, Inc.
San Jose, California 95124 (US)**

(72) Inventor: **AUE, Volker
01099 Dresden (DE)**

(74) Representative: **Kehl, Ascherl, Liebhoff & Ettmayr
Patentanwälte Partnerschaft mbB
Emil-Riedel-Straße 18
80538 München (DE)**

(56) References cited:
**US-A1- 2006 111 050    US-A1- 2008 310 529**

**Description**

**TECHNICAL FIELD**

The invention relates to a beamforming antenna and to a method for operating a beamforming antenna.

**BACKGROUND**

Although applicable to any wireless communication system, the present invention will mainly be described in conjunction with the 5$^{th}$ generation of wireless communication networks, also referred to as 5G-Networks.
Today wireless communication networks are widely used for providing voice and data communication to users. Such wireless communication networks, like e.g. LTE based or so called 4G networks, usually comprise a core network and a so-called radio access network or RAN. It is understood, that each of these interrelated networks may comprise a plurality of different elements, modules or units that together provide the required communication capabilities.
As part of the RAN so called eNodeBs or base stations provide the link between the operators network and the users mobile devices or user equipments (UEs). Usually the eNodeBs will comprise antennas that serve for transmitting outgoing signals to the UEs and for receiving incoming signals from the UEs. Up to now, most commonly passive or active antennas with fixed radiation patterns are used.
However, to improve system capabilities, so called active antennas or smart antennas are being developed that provide beamforming capabilities. In such a smart antenna multiple parallel signal paths are provided in transmit and receive direction, respectively. For performing beamforming all the signal paths should have the same phase and amplitude response. In real implementations however, the single signal paths will comprise different phase and amplitude responses due to effects of temperature, material variance or spread, and wear. Additionally, if different phased lock loops (PLLs) are used, the phases between carriers that use a different PLL may appear random, as each PLL may lock differently.
A possibility of calibrating the single signal paths in an antenna consists in turning off single signal paths and performing a respective calibration, e.g. in a closed loop system. However, especially when calibrating the transmit signal paths, the operative signals in the communication network may be masked by the calibration signals.
Further, operators of wireless communication networks usually need to install, turn-up, and maintain their networks. Hence, it is important for a network operator to know, if the antenna is (still) working as expected. To this end, technicians of a network operator may e.g. perform tests on installed antenna systems by injecting a test signal into the antenna that is then emitted by the antenna as a whole.
A major drawback of this approach is that it cannot be used while the antenna is operating in the live network. It is useful mostly for testing the antenna during installation of the antenna. There also exists test equipment that may evaluate the LTE signals as transmitted in a live network and may measure parameters such as RSRP for received signal strength and Cell ID to identify which cells are visible.
The present measurement solutions however offer very little flexibility and they do not provide detailed measurements to evaluate if each antenna port works as should.
Document US 2008 / 310 529 A1 discloses a radio transmitter with a calibration reference signal generator. Document US 2006 / 111 050 A1 discloses an apparatus for correcting phase and amplitude variations of a data signal caused by a non-linear system in a multi-antenna communication system.
There is a need for an improved measurement of the internal and external properties of a smart antenna.

**SUMMARY OF THE INVENTION**

The above stated problem is solved by the features of the independent claims. It is understood, that independent claims of a claim category may be formed in analogy to the dependent claims of another claim category.
The present invention is based on the fact that in modern wireless communication systems antennas may comprise variable antenna patterns instead of static antenna patterns. Such antennas with variable antenna patterns may e.g. be called beamforming antennas, active antennas or massive MIMO antenna array.
Such antennas usually comprise a plurality of single antenna elements and a dedicated signal processing chain for each one of the single antenna elements. The individual signal processing chains may e.g. comprise the circuitry required to convert a digital signal that is provided for the respective antenna element into an analog signal, e.g. a digital to analog converter, and to amplify the analog signal accordingly for emission by the respective antenna element, e.g. an amplifier. It is understood, that other components, like e.g. an up-converter, filters or the like, may be provided between the digital to analog converter and the amplifier, or between the amplifier and the antenna element. A beamforming antenna may further comprise a beamforming logic that comprises an interface to a so-called base band unit and that is coupled to the single antenna elements and provides the respective digital signals. The base band unit may e.g. send IQ signals via a CPRI interface or any other digital interface. The beamforming logic may then calculate phase offsets and amplitude values for the digital signals that are provided to each of the antenna elements via the respective signal processing chain to form the respective beams. The mapping of M signal streams for the base station (e.g. IQ signals) to the N antenna elements results in MxN individual signal streams, where N can be much larger than M (N>>M). It is understood, that respective signal processing chains may also be provided for signals received by the single antenna elements. i.e. in receiving direction. It is further understood, that in the receiving direction beamforming may also be applied. A beamforming antenna or massive MIMO antenna array may therefore comprise a transmitter and a receiver or a transceiver for every single antenna element.

With a beamforming antenna or a massive MIMO antenna array it is therefore possible to alter the antenna pattern in transmission direction and in reception direction by applying respective phase offsets and attenuations to the signals that are emitted or received by the single antenna elements.

In a beamforming antenna or a massive MIMO antenna array, each transmitter and receiver needs to be calibrated. Calibration is necessary to maintain the phase, time, and amplitude coherence between the different transmitters and receivers. Usually, such a calibration will be performed by a calibration device inside the beamforming antenna or massive MIMO antenna array.

Common calibration devices usually generate calibration signals in the time domain that are then injected to the single signal paths in the beamforming antenna on one end and analyzed on the other end of the respective signal paths.

This so-called time-domain calibration uses calibration routines that are performed in the time-domain. The reference signals for a time-domain calibration are therefore time-domain signals. The calibration signals are added in the time-domain to the signal paths or sample streams in the beamforming antenna, all correlations are performed in the time-domain, and the compensation by complex multiplication and latency adjustment e.g. through fractional interpolation is performed in the time-domain as well. Those techniques, however, possess:

- Flat frequency response: Time-domain calibration assumes a frequency-nonselective behavior of the antenna system including the calibration network. With the tendency to increase bandwidths to entire bands or even across multiple bands, this assumption may not be correct. Filters involved in the system may have the tendency to add additional distortion at the band edges. Additional frequency-selectivity may come through improper matching at connectors.

- High signal processing effort: In order to compensate for latencies in the time-domain, fractional time-delays need to be calculated. The calculations needed require multiple multiplications per sample which may not be affordable in an antenna system that uses many transmit and receive chains.

- Not ideal for multi-carrier signals: Many modern communications systems use waveforms that are designed in the frequency domain. These are for example orthogonal frequency division multiplexing (OFDM) or single-carrier FDMA (SC-FDMA). The latter strictly is a time-domain signal but with its properties well defined through frequency-domain filtering and cyclic prefix-addition. Time-domain reference signals do not fit nicely into this scheme as their spectrum cannot be designed as steep as for an OFDM signal.

- Orthogonal waveforms. If it is desired to use reference signals that are mutually exclusive to the receive or transmit signals, that is, their waveforms do not overlap in frequency and time with the transmit and receive signals, it is much more straightforward to use reference signals that are of similar nature as the transmit and receive signals.

The present invention therefore provides calibration signals that are generated in the frequency-domain.

The present invention provides a beamforming antenna with a number of signal paths for transmitting and receiving communication signals. This means, that at least one signal path is provided in the beamforming antenna for transmitting communication signals and at least one signal path is provided for receiving communication signals. It is understood, that each one of the signal paths may e.g. comprise digital and/or analog components for processing the respective signals. The transmit signal paths may e.g. comprise an interface to a signal source, like e.g. a base-band unit, BBU, a beamformer that modifies amplitudes and phases of the signals to be transmitted, transmitters and RF front-ends, and antenna elements for radiating the respective signals. The receive signal paths may share the antenna elements with the transmit signal paths and comprise corresponding elements, like RF front-ends, receivers, and the like. It is understood, that the interface to the BBU may e.g. be a digital bi-directional interface, like a CPRI-interface or any other adequate interface. In particular, if frequency domain data or so-called resource blocks are used, eCPRI or IEEE 1914.3 may be an interface of choice. Such an interface may therefore serve to receive from the BBU signals to be transmitted and to provide to the BBU signals that are received by the beamforming antenna.

It is further understood, that e.g. a splitter may be provided to split an incoming signal stream into a dedicated signal stream for every signal path or antenna element in transmit direction. In receive direction a combiner may be provided to combine the received signals from the single receive signal paths into a single signal stream for transmission to the BBU. The beamformer may be provided with the splitter/combiner as required. It is understood, that the respective beamforming information, e.g. a beamforming vector, may also be received from the BBU.

Further, the present invention provides the calibration signal generator. The calibration signal generator generates at least one calibration signal and provides the at least one calibration signal to the respective signal paths. For example, in receive direction, the same calibration signal may be injected into the signal paths at the antenna element and may be individually analyzed at the other end of the respective signal paths, e.g. before combining the single signal streams of the different signal paths. This means that in receive direction and for internal calibration of the beamforming antenna, a single calibration signal may be sufficient.

In transmit direction the calibration signal generator may in contrast generate a dedicated calibration signal for every one of the signal paths. Therefore, the dedicated calibration signals may be separated and may individually be analyzed after travelling through the respective signal path. The calibration in transmit direction may therefore also comprise an external calibration, where the calibration signals are received by an external measurement device. Such an external measurement device may then separate the calibration signals in the received signal and analyze the calibration signals individually.

The calibration signal generator generates the calibration signals in the frequency domain. This means that the calibration signal generator provides at least one calibration sub-signal in at least one of the sub-carriers that are used for the multi-carrier transmission with the beamforming antenna. It is understood, that each calibration signal may comprise calibration sub-signals in any number of sub-carriers. This means that each one of the calibration signals comprises a predetermined number of calibration sub-signals in different sub-carriers of the calibration signal.

The calibration signal generator may convert the calibration signals into the time domain to overlay them over the operational signals in the beamforming antenna. However, it is understood, that in a multi-carrier system or transmission, it is not necessary to add the calibration signal to the operational signal after frequency-time conversion. The calibration signals may alternatively be added directly to the transmit signal in the frequency-domain prior to frequency-time conversion. Likewise, it is not necessary to extract the operational signals with the calibration signals for correlation before time-frequency conversion at the receiver. Instead, signal analysis of the received signal that includes the calibration signal can be directly performed in frequency domain after time-frequency conversion.

With the above-mentioned features of the beamforming antenna, it is possible to provide calibration signals in the beamforming antenna that better fit the nature of the operational transmit and receive signals of modern multi-carrier signals. Further, such calibration signals allow estimating the transfer functions of the signal paths. Finally, the computational complexity of the entire calibration and compensation system is lower with calibration signals in the frequency-domain than with calibration signals in the time-domain.

Further embodiments of the present invention are subject of the further subclaims and of the following description, referring to the drawings.

In an embodiment, the beamforming antenna may comprise in every signal path a signal processor and a transceiver and an antenna element, wherein the signal processor may be coupled to the respective transceiver, and the transceiver may be coupled to the respective antenna element. The calibration signal generator may be configured to generate a dedicated calibration signal for every signal path and to couple the calibration signal into the respective signal paths via the signal processor. Alternatively, the calibration signal generator may be configured to generate a single calibration signal for all signal paths and to couple the single calibration signal into the signal paths, especially at the antenna element or a signal line between the antenna elements and the respective transceivers.

It is understood, that in addition to the signal processor, the transceiver, and the antenna element, the single signal paths may comprise additional elements. Such Elements may e.g. comprise RF front-ends in addition to the transceivers, or single transmitters and receivers instead of the transceivers. The signal processor may e.g. comprise the above-mentioned functions like e.g. interfacing the beamforming antenna with a BBU, splitting the signals to be transmitted or combining received signals, beamforming the single signals, and the like. It is understood, that the term "signal processor" in this context may refer to any combination of digital and/or analog components that may provide the respective functionality between the BBU and the transceivers of the single signal paths.

If the calibration signal generator generates a dedicated calibration signal for every signal path, the different calibration signals may be extracted and analyzed at a receiving side. The term "receiving side" here may refer to a receiver of the calibration signals that is internal to the beamforming antenna or to a receiver of the calibration signals that is external to the antenna. This means, that the calibration signals may also be used to characterize the signal path after the calibration signals are emitted by the antenna elements of the beamforming antenna. The receiver of the calibration signals may separate the single calibration signals from each other and from the operational signals in the beamforming antenna. The separated calibration signals may then individually be analyzed to characterize the single signal paths of the beamforming antenna.

Multiple calibration signals may also be injected at the antenna element or the respective signal lines, and the processing and analysis of the calibration signals may be performed externally to the beamforming antenna, e.g. with a respective measurement device. This embodiment allows characterizing the channel in detail.

The calibration signal generator may therefore e.g. inject the calibration signals as time-domain signals that are overlaid over the operational signals. As alternative, especially in systems where the operational signals are generated in the frequency domain, the calibration signal generator may also inject the calibration signals in the frequency domain.

Especially, in a multi-carrier system or multi-carrier transmission, it is not necessary to add the calibration signal to the signal after frequency-time conversion, i.e. in the time domain. The calibration signals can be directly added to the transmit signal in the frequency-domain prior to frequency-time conversion. Likewise, it is not necessary to extract the signal plus calibration signal for analysis before time-frequency conversion at the receiver. Instead, analysis can be directly performed with the received signal that included the calibration signal in the frequency domain after time-frequency conversion.

When generating a calibration signal, the calibration signal generator is configured to generate for each one of the calibration sub-signals a signal stream. The signal streams are mutually independent orthogonal signal streams or quasi-orthogonal signal streams. The calibration signal generator is further configured to map the generated signal streams in each case to constellation symbols, and to perform a multi-carrier modulation, e.g. an inverse Fourier Transform or an inverse Fast Fourier Transform, based on the constellation symbols, and to convert the output of the multi-carrier modulation into a serial stream, wherein the serial stream represents the calibration signal in the time domain.

The term "mutually independent signal streams" refers to signal streams that are independent of each other. Especially if signal analysis is based on correlation, the independency of the signals is important to achieve independent correlation results for every one of the calibration sub-signals such that the signal path is only analyzed for the respective sub-carrier. Mutually independent signal streams may e.g. comprise orthogonal sequences. Each signal stream may e.g. be one out of a set of Walsh-Hadamard sequences which length corresponds to the correlation length used by the correlators (see below).

The single mutually independent signal streams are then each mapped to respective constellation symbols, e.g. PSK or QAM. The result are parallel streams of respective constellation symbols.

It is understood, that the number of calibration sub-signals or parallel streams of respective constellation symbols may be lower than the overall number of sub-carriers of the multi-carrier transmission.

In an exemplary embodiment, the number of sub-carriers may e.g. be 2048, each sub-carrier being 15 kHz wide. In such a multi-carrier transmission, only some of the 2048 sub-carriers may be used, for example 1200 or less, such that the entire sub-carrier multiplex of used sub-carriers is 18 MHz or 20 MHz wide. The number of calibration sub-signals may therefore e.g. be 1200 or less. This means that the calibration sub-signals may overlap the operational data or signals in the single sub-carriers. Alternatively, sub-carriers that are not used to transmit operational data or signals may be used for the calibration sub-signals.

As mentioned above, the parallel streams of respective constellation symbols may be added to the operational signals in the frequency domain. As alternative, the parallel streams of respective constellation symbols may be modulated by a multi-carrier modulation based on the constellation symbols. For performing the modulation, for example an inverse Fourier Transform or an inverse Fast Fourier Transform may be used that converts the parallel streams of respective constellation symbols from the frequency domain into the time domain. The time-domain parallel signal streams may then be converted into serial streams. These serial streams may then be added or superimposed over the operational signals of the multi-carrier transmission in the time domain.

It is understood, that the multi-carrier modulation may run synchronously with the transmit or receive signals, depending on whether the signal paths in transmit or receive direction are calibrated. Zeros may be filled in for sub-carriers that do not carry calibration sub-signals. In addition, after modulation, i.e. conversion to the time-domain, a cyclic prefix may be added to the calibration signal in the time domain.

In a further embodiment, the calibration signal generator may be configured to generate the single calibration sub-signals with a predetermined power level, especially with a power level that equals the power level of operative signals in the beamforming antenna or with a power level that is lower than the power level of operative signals in the beamforming antenna. The calibration signal generator may further be configured to provide the calibration sub-signals with a power level that equals the power level of operative signals in sub-carriers that are not used by operative signals. The calibration signal generator may be configured to provide the calibration sub-signals with a power level that is lower than the power level of operative signals in sub-carriers that are used by operative signals.

Generating the calibration sub-signals in specific sub-carriers with the same power level as the operational signals may for example be used, when the respective sub-carrier is "free" or not used for operational signals. This means that no operative signals can be cancelled out in the respective sub-carrier because no such signals exist in the respective sub-carrier.

In contrast, if the calibration sub-signals are overlaid over operational signals in the same sub-carrier, the operational signals should not be masked by the respective calibration sub-signals. The calibration sub-signals may in such cases be provided with a power level that is well below the power level of the operational signals in the respective sub-carriers. The calibration sub-signals may e.g. comprise a power level below a noise level in the respective multi-carrier transmission. Analysis of the calibration signals may then e.g. be performed using correlation techniques with a corresponding correlation length, as will be described below.

In another embodiment, the calibration signal generator may comprise for each one of the mutually independent signal streams a calibration sub-signal generator, especially a pseudo random bit generator, configured to generate the respective signal stream.

For signals which characteristics are designed in the frequency-domain, like e.g. multi-carrier or OFDM signals the calibration signal generator may - as indicated above - generate a dedicated calibration sub-signal for each one of at least a sub-group of the sub-carriers. For an L-carrier OFDM signal, i.e. for an OFDM signal with a number of sub-carriers that equals L, the reference signal generator may therefore employ up to L calibration sub-signal generators or less. Each calibration sub-signal generator generates a single-carrier calibration signal, also calibration sub-signal, and may for example consist of a random or pseudo-random bit generator. Such random or pseudo-random bit generators may e.g. be based on the same hardware but may be initialized with different seeds.

It is understood that a sequence provided by a random or pseudo-random bit generator when converted from serial to N parallel streams produces N random bit streams. Thus, the calibration sub-signal generators may e.g. also be provided by a single random or pseudo-random bit generator followed by a serial-to-parallel converter. A symbol generator for performing the constellation mapping may also be included before the serial-to-parallel conversion.

In yet a further embodiment, the calibration signal generator may comprise for each one of the mutually independent signal streams a constellation mapper configured to map the respective signal stream to respective constellation symbols.

As indicated above, the single calibration sub-signals may be provided as signal streams. Further, constellation mapping is performed based on a number of bits per constellation symbol. Therefore, the constellation mapper will take the respective number of bits, e.g. 2 or 3 or more, from the respective signal stream and provide the respective constellation symbol, e.g. as a vector with respective phase and amplitude information. The constellation mapper may e.g. comprise a look-up table that provides the respective vector based on the input bits. Alternatively, the constellation mapper may perform a real-time calculation of the constellation symbols.

The resulting constellation symbols may e.g. be any kind of PSK or QAM symbols.

In another embodiment, the calibration signal generator may comprise for each one of the calibration signals a multi-carrier modulator configured to multi-carrier modulate the mutually independent signal streams of the respective calibration signal.

The single calibration sub-signals, e.g. the constellation symbols like PSK or QAM symbols generated by the constellation mapper, may then be presented to a multi-carrier modulator. The multi-carrier modulator may e.g. perform any kind of inverse Fourier Transform on the provided single calibration sub-signals that runs synchronously with the transmit or receive signals, depending on where it is employed. Zeros may be filled in, for sub-carriers for which no calibration sub-signal is to be used.

The single calibration sub-signals of the $k^{th}$ subcarrier may be expressed as

$$X_k(l) = \frac{1}{\sqrt{2}}[1-2c(2l)]+j\frac{1}{\sqrt{2}}[1-2c(2l+1)],$$

$l = 0,\cdots,L - 1$ where $l$ is the index of calibration symbol and c(m) is the pseudo-random sequence.

For example, an inverse Fast Fourier Transform may be performed on the calibration sub-signals with the filled-in zeros. An input of for example 2048 values to the inverse Fast Fourier Transform will result in a vector of 2048 samples in the time domain.

As explained above, the calibration sub-signals may also be added to the operational signals in the frequency domain. In this case, for example the constellation symbols for the calibration sub-signals may be added to the constellation symbols of the operational signals in the respective sub-carriers. Multi-carrier modulation and the parallel-to-serial conversion explained below may in this case be omitted, because they will be performed in the signal processing chain of the operational signals.

In a further embodiment, the calibration signal generator may comprise for each one of the calibration signals a parallel-to-serial converter configured to convert the output of the multi-carrier modulator into a serial stream and output the serial stream as calibration signal in the time domain, and especially to add cyclic prefixes to the serial stream prior to outputting the serial stream as calibration signal.

For transmission via an air interface, signals are usually provided with a cyclic prefix. Such a cyclic prefix may e.g. be a periodic extension of the last part of an OFDM symbol that is added to the front of the symbol in the transmitter, and is removed at the receiver before demodulation. The cyclic prefix on the one hand provides a guard space between successive OFDM symbols and therefore prevents inter-symbol interference. In addition, the cyclic prefix ensures orthogonality between the sub-carriers by keeping the OFDM symbol periodic over the extended symbol duration, and therefore avoiding inter-carrier interference.

After modulation, i.e. conversion to time-domain, the cyclic prefix may therefore be added in the same way as for the operational receive or transmit signals, respectively. The resulting sample sequence after cyclic prefix addition may then be used as the calibration signal in the time-domain. This calibration signal may be superimposed in time-domain to the operational signals in the beamforming antenna, either in transmit or receive direction.

In a further embodiment, the beamforming antenna may comprise for each one of the calibration signals a signal analyzer configured to analyze the calibration signals after passing the signal paths and configured to determine for every sub-carrier in the respective signal path a phase offset and/or an amplitude offset, and/or to determine a delay for the respective signal path. The delay may e.g. be estimated by determining the slope of the estimated sub-carrier correlation values either by differentiation or by curve-fitting.

The signal analyzer may be provided internally in a housing of the beamforming antenna with the signal processing elements of the beamforming antenna. It is however understood, that the signal analyzer may also be provided externally to such a housing. With an external signal analyzer, the beamforming antenna may be analyzed together with the respective transmission channel, e.g. a line-of sight transmission channel or a transmission channel comprising reflections.

With an internal signal analyzer, the specific characteristics of the single signal paths in the beamforming antenna may be analyzed. It is understood, that when analyzing the transmit signal paths, the signal analyzer may analyze the signals after they travel the respective signal path, e.g. at the respective antenna element or a signal line connecting the antenna element to the signal path. When analyzing the receive signal paths, the signal analyzer may analyze the signals at the end of the receive signal paths that is opposite to the antenna elements, e.g. at the signal processor.

Analyzing may include converting the received signals into the frequency-domain and analyzing the signals in the single sub-carriers. In the single sub-carriers, the calibration sub-signals may be extracted or processed individually to determine characteristics for the respective signal path for the single sub-carriers. Determining the characteristics may comprise determining for the single sub-carriers in the respective signal paths a phase offset and/or an amplitude offset, and/or determining a delay for the respective signal path.

In another embodiment, the beamforming antenna may comprise for each one of the sub-carriers a compensator that is configured to compensate in the frequency domain the phase offset and/or amplitude offset for the sub-carriers in the respective signal path, and to compensate the delay for the respective signal path.

Typically, in the beamforming antenna a signal path in transmit direction will comprise a serial-to-parallel converter for converting a signal stream of an operational signal into a parallel signal that is then provided to an inverse Fourier Transform. The transformed parallel signal is then provided to a parallel-to-serial converter and the cyclic prefix is added, resulting in a respective signal stream in the time-domain. All these steps may be performed in the digital domain. In receive direction, the analogous steps will be performed. From the received time-domain signal the cyclic prefix is removed and the signal stream is converted into a parallel signal. The parallel signal is demodulated using e.g. a Fourier Transform. The parallel signal in the frequency domain is then converted to a serial signal, which resembles the data to be transmitted. Again, all these steps may be performed in the digital domain.

The compensator may in transmit direction e.g. be positioned between the serial-to-parallel converter and the inverse Fourier Transform, e.g. an IFFT modulator. In receive direction the compensator may be provided between the Fourier Transform, e.g. a FFT demodulator, and the parallel-to-serial converter.

In a further embodiment, the compensator may be configured to multiply the respective signals in the respective sub-carriers in the frequency domain with a respective complex compensation value.

The compensator may comprise for every sub-carrier of the single signal paths a multiplier. Such multipliers may multiply the signals in the respective sub-carrier with a complex compensation value. The complex correction values may include the phase and gain to be corrected in the respective sub-carrier.

The respective compensation values may be determined by the signal analyzers, as will be described below.

In another embodiment, each one of the signal analyzers may comprise a serial-to-parallel converter configured to convert the respective calibration signal after passing the signal path into a parallel signal, and especially to remove cyclic prefixes of the calibration signal prior to converting the calibration signal into a parallel signal.

In order to analyze the calibration sub-signals in the single subcarriers after transmission through the respective signal path, if present, the cyclic prefix is removed of the signal received at the signal analyzers. The received signal will in addition to possible operational signals contain the calibration sub-signals for the respective signal path.

The resulting signals - without cyclic prefix - are then converted to a parallel signal that can be demodulated.

In yet another embodiment, each one of the signal analyzers may comprise a multi-carrier demodulator configured to demodulate the respective calibration signal after passing the signal path and to provide respective frequency domain signals, especially to demodulate the respective calibration signal based on a Fourier Transform of the respective calibration signal.

On the parallel signal or vector from the serial-to-parallel conversion, a multi-carrier demodulation is performed. The multi-carrier demodulation may e.g. comprise a Fourier Transform, where typically a fast Fourier transform, FFT, may be used. The demodulation will be performed with the same vector size as the modulation. Therefore, for example if 2048 sub-carriers are used when generating the calibration signals, the same number of sub-carriers will be output by the Fourier Transform demodulation. In the parallel output provided by the Fourier Transform the single calibration sub-signals will then be further processed. To this end for example correlators may be used, as will be described in the following.

In an embodiment, each one of the signal analyzers may comprise for each one of the calibration sub-signals a correlator configured to correlate a respective frequency domain signal with the respective one of the calibration sub-signals and to determine the respective phase offset and/or an amplitude offset based on the correlation result, and/or to determine a delay for the respective signal path based on the correlation results of all sub-carriers.

On the outputs of the FFT that correspond to sub-carriers that contain a calibration sub-signal, correlation is performed. The other outputs of the demodulator may be ignored by the signal analyzer. Correlation is done in a similar fashion as for time-domain correlation. This means that each demodulator output is multiplied with a complex-conjugate replica of the respective calibration sub-signal of the corresponding calibration sub-signal generator. The resulting products are summed up over the correlation length to produce a set of correlation results.

For flat fading channels, the output of the FFT of the $k^{th}$ subcarrier can be written as

$$Y_k(l) = X_k(l) \cdot \alpha e^{-j(2\pi k \tau \Delta f + \phi)}$$

$l = 0, \cdots, L - 1$ where $\alpha$, $\tau$, and $\phi$ denote the amplitude, the delay, and the phase shift of the channel. The channel properties are assumed to be constant with respect to the calibration signal length L.

Each correlation result is proportional to the gain of the path from insertion of the calibration signal to the correlator in the signal analyzer. Likewise, the phase of the correlation result corresponds to the phase from the point of insertion of the calibration signal all the way through the respective signal path to the point where the signal containing the reference signal is analyzed.

The correlation output can be expressed as

$$R_k = \sum_l X_k^*(l) \cdot Y_k(l) \, ,$$

where * denote the complex conjugate.

It is understood that the signal-to-noise ratio, SNR, for a correlation value of a sub-carrier is only a fraction of the SNR of the correlation value of a time-domain correlator for a given correlation time. However, the correlation value of the sub-carriers give insight into the transfer function from the injection point of the reference signal to the correlators. Thus, impairments especially at the band edges introduced by the filter can be estimated.

Since the correlation values of the sub-carriers are proportional to the losses/gains for each frequency, the losses that in particular occur at the band edges can be read-off the correlation values. Those losses can then be compensated for by pre-amplifying the corresponding data carrying signals, accordingly. Likewise, any ripple, i.e., deviation from a mean observed in the correlation values can be compensated for, accordingly.

The Fourier properties show that a delay in the time domain corresponds to a linearly increasing phase in the frequency domain. Thus, by attempting to estimate the slope of the phase derived from the correlation values over frequency or over the sub-carrier index, the latency or delay involved in the signal path to be calibrated can also be estimated. If the latencies are perfectly compensated for, by applying the respective correlation values, the common phase and amplitude/gain values are obtained. Those values correspond to the equivalent common phase and amplitude/gain values that are derived in time-domain.

Especially in an OFDM system or, in a more general sense, in a system that is designed to operate in the frequency-domain, which is the case for LTE, 5GNR and WLAN, latencies can as well be compensated for in the frequency-domain without interfering with the receiver. Again, a time-shift or delay, respectively, corresponds to a linear increasing phase over frequency in the frequency domain. Thus, by including the linear increasing phase in the complex compensation values, the latencies can be compensated.

Moreover, if the signal-to-noise ratio in the estimation values derived through correlation is high enough, the latency is implicitly estimated by estimating the complex compensation values.

An alternative implementation for estimating the latencies is a combination with a conventional time-domain estimation e.g. using a common early-minus-late structure. It is noted that provided the calibration signals are mutually independent before the modulation, e.g. the IFFT, the combination of the calibration sub-signals that is formed in the time-domain itself is a random signal with an autocorrelation function that is close to a Dirac-impulse filtered by a low-pass filter with the bandwidth equivalent to the signaling bandwidth.

Since the spectrum of an OFDM signal is rectangular, the correlation function resembles a sinc-function. The mathematical relationship is known by the Wiener-Khinchin theorem. Thus, the latencies can be estimated by finding the latency for which the difference of the squared absolute value of the correlation value with the waveform advanced by one sample and the squared absolute value of the correlation value of the waveform retarded by one sample is minimized.

Likewise, if the resolution in the frequency-domain can be sacrificed for a better signal-to-noise ratio or a reduced correlation time, respectively, adjacent correlators can be replaced by a single correlator if the correlation values are to be added otherwise anyhow.

It is understood, that both the frequency-domain estimation and the frequency-domain compensation or calibration as explained herein are independent implementations. A frequency-domain compensation technique for compensating a latency may therefore be used with a latency detector that is implemented in the time-domain. If the frequency-domain estimator is used to estimate the common phase and gain mismatch in the transmit paths, the corresponding compensation may be implemented in the time-domain. Furthermore, it is understood, that the proposed frequency-domain estimation and/or compensation is applicable to both TDD as well as FDD systems.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a block diagram of an embodiment of a beamforming antenna according to the present invention;
Fig. 2    shows a block diagram of another embodiment of a beamforming antenna according to the present invention;
Fig. 3    shows a block diagram of an embodiment of a signal generator for use with a beamforming antenna according to the present invention;
Fig. 4    shows a block diagram of an embodiment of a signal analyzer for use with a beamforming antenna according to the present invention;
Fig. 5    shows block diagrams of embodiments digital sections of signal paths for use with a beamforming antenna according to the present invention;
Fig. 6    shows a block diagram of a measurement device; and
Fig. 7    shows a flow diagram of an embodiment of a method according to the present invention.

In the figures like reference signs denote like elements unless stated otherwise.

## DETAILED DESCRIPTION OF THE DRAWINGS

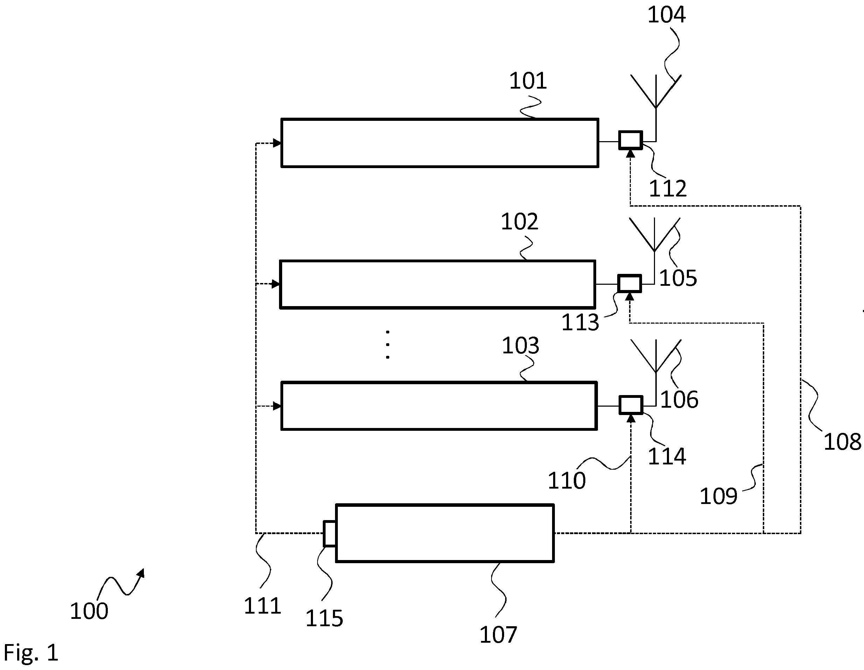

Fig. 1 shows a block diagram of an embodiment of a beamforming antenna 100. The beamforming antenna 100 comprises a number of signal paths 101, 102, 103, wherein three signal paths 101, 102, 103 are shown and more signal paths are hinted at by three dots. Each signal path is coupled to an antenna element 104, 105, 106. Further, a calibration signal generator 107 is provided that is coupled via supply elements 112, 113, 114, e.g. directional couplers, between the antenna elements 104, 105, 106 and the respective signal paths 101, 102, 103. The calibration signal generator 107 is further coupled to the end of the signal paths 101, 102, 103 opposite to the antenna elements 104, 105, 106. On this end of the signal paths 101, 102, 103 no single supply elements 112, 113, 114 are provided. This is because on this end, the signals may be present as digital signals and a direct digital interface may be provided as supply interface 115. It is understood, that although the calibration signal generator 107 is coupled to both ends of the signal paths 101, 102, 103, in other embodiments, the calibration signal generator 107 may be coupled to the signal paths 101, 102, 103 either via supply elements 112, 113, 114 or via supply interface 115. Further, it is understood, that two different entities, e.g. two local signal generators, may be provided for coupling to the different ends of the signal paths 101, 102, 103, instead of a single calibration signal generator 107.

The beamforming antenna 100 may e.g. be used in a communication system that uses OFDM or single-carrier FDMA (SC-FDMA) for transmitting and receiving signals via the antenna elements 104, 105, 106. Such systems may e.g. be LTE, 5GNR, WiFi, or the like.

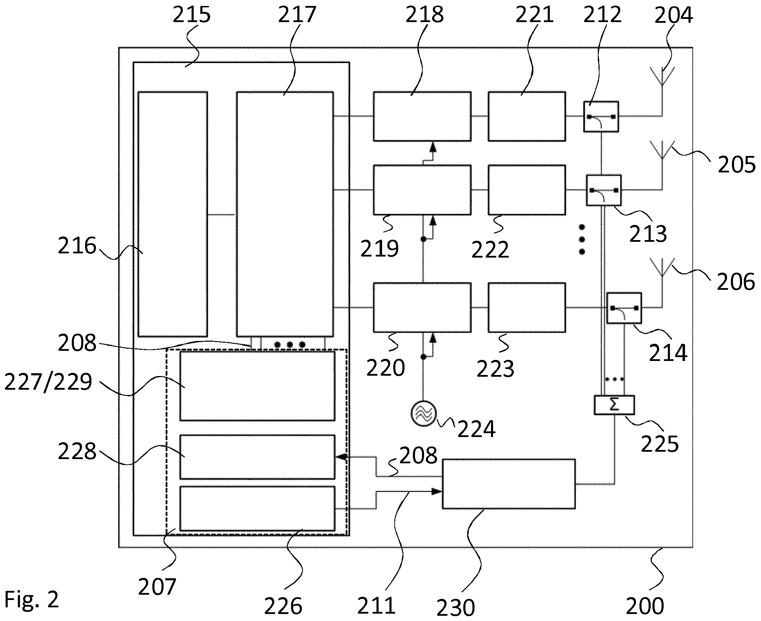

The single signal paths 101, 102, 103 may each be capable of processing signals in receive and transmit direction. It is understood, that respective elements like transceivers, RF front-ends and the like may be provided (see e.g. Fig. 2) in the signal paths 101, 102, 103.

The calibration signal generator 107 for calibration or more general characterization of the single signal paths 101, 102, 103 generates a number of calibration signals 108, 109, 110, 111 with the sub-carriers of the multi-carrier transmission in the frequency domain. The calibration signals 108, 109, 110, 111 comprising a calibration sub-signal in at least one of the sub-carriers of the respective calibration signal 108, 109, 110, 111.

It is understood, that to characterize the signal paths 101, 102, 103 in transmit direction, a single calibration signal 111 may be injected into the signal paths 101, 102, 103 sequentially on the end opposite to the antenna elements 104, 105, 106. The signals may then individually be analyzed one after the other after travelling through the single signal paths 101, 102, 103. This means that the single signal paths 101, 102, 103 are analyzed sequentially and the calibration signal 111 is only injected into one of the signal paths 101, 102, 103 at every moment in time. As alternative, calibration signal 111 may comprise individual path calibration signals for the signal paths 101, 102, 103. This means that a dedicated path calibration signal is injected into every one of the signal paths 101, 102, 103 on the end opposite to the antenna elements 104, 105, 106. The signals may then individually be analyzed after travelling through the single signal paths 101, 102, 103.

If individual path calibration signals are provided in the calibration signal 111, these path calibration signals may be mutually independent, especially orthogonal to each other. This allows separately analyzing the single path calibration signals e.g. with a respective correlation.

For characterizing the single signal paths 101, 102, 103 in receive direction it is also possible to inject the same calibration signal via the supply elements 112, 113, 114 into every one of the signal paths 101, 102, 103. However, depending in which stage of the signal paths 101, 102, 103 the resulting signals may be evaluated, it may be required to provide an individual calibration signal 108, 109, 110 for every one of the signal paths 101, 102, 103, e.g. if the calibration signals 108, 109, 110 are analyzed in a stage where they are combined into a single signal.

If an individual calibration signal 108, 109, 110 is provided for every one of the signal paths 101, 102, 103, the single calibration signal 108, 109, 110 may also be mutually independent, especially orthogonal to each other. As explained above, this allows separately analyzing the single calibration signals 108, 109, 110 e.g. with a respective correlation.

When generating a calibration signal 108, 109, 110, 111, the calibration signal generator 107 may e.g. generate for each one of the calibration sub-signals a signal stream, wherein the signal streams are mutually independent. Such signal streams may e.g. be orthogonal signal streams or quasi-orthogonal signal streams. Such (quasi-) orthogonal signal streams may e.g. be individually analyzed by a respective correlation. This allows analyzing the transmission properties of the signal paths 101, 102, 103 specifically for the respective frequency band or frequency range of the respective sub-carrier, as will be explained in more details below.

Fig. 2 shows a block diagram of another beamforming antenna 200. The beamforming antenna 200 also comprises a plurality of signal paths (not separately referenced), although only three signal paths are shown and further signal paths are hinted at by three dots.

A typical number may e.g. be 4x4=16 or 8x8=64 signal paths. The signal paths all share a common signal processor 215. The signal processor 215 comprises an interface unit 216 that provides an interface to an infrastructure of a communication network. The interface unit 216 may e.g. be implemented as or comprise a CPRI interface or any other adequate interface, and may e.g. couple the beamforming antenna 200 to a base band unit of a communication network. The interface unit 216 is coupled to a splitter/combiner 217 in the signal processor 215. The splitter/combiner 217 may also comprise beamforming capabilities. The splitter/combiner 217 may e.g. receive a single signal stream from the interface unit 216 and split the single signal into an individual signal for each one of the signal paths. At this stage a respective beamforming may also be applied by applying respective phase and amplitude modifications. The respective beamforming information may e.g. be provided by the based band unit as a respective beamforming vector.

The splitter/combiner 217 outputs and receives operational signals for every signal path and is therefore coupled with respective transceivers 218, 219, 220, or transmitters and receivers in every one of the signal paths. The transceivers 218, 219, 220 are further coupled in each signal path to an RF front-end 221, 222, 223, which is coupled via a supply element, here directional couplers 212, 213, 214, to a respective antenna element 204, 205, 206. It is understood, that in other embodiments, a single signal path may e.g. also comprise two or more antenna elements that are coupled to the same RF front-end or with individual RF front-ends coupled to the same transceiver. Further, a clock source 224 is provided that supplies the single transceivers with a respective clock signal.

The beamforming antenna 200 further comprises a calibration signal generator 207. The calibration signal generator 207 is shown as comprising a signal generator 226 for generating calibration signals 211 in receive direction of the signal paths, and a signal generator 227 for generating calibration signals 208 in transmit direction of the signal paths. Further, a signal analyzer 229 is provided for analyzing the signals in receive direction of the signal paths, and a signal analyzer 228 is provided for analyzing the signals in the transmit direction of the signal paths.

It is understood, that the calibration signal generator 207 may be an integrated device with respective processors or programmable logic sections that allow implementing both signal generators 226, 227 and the signal analyzers 228, 229 in a single device or that allow other internal partitioning of the functionality of the calibration signal generator 207. The signal generator 226 and the signal analyzer 228 are coupled to a transceiver 230 that is further coupled to a splitter/combiner 225. The splitter/combiner 225 is coupled to the single directional couplers 212, 213, 214.

In the beamforming antenna 200 the signal generators 226, 227 each generate a single or multiple known calibration signals 208, 211. This calibration signals 208, 211 may e.g. be based on a pseudo-random binary sequence with specific auto-correlation and cross-correlation properties. It is assumed here that the transceiver 230 has a digital interface towards the calibration signal generator 207 and internally performs digital-to-analog conversion. It is however also possible, that the calibration signal generator 207 includes the digital-to-analog interface and therefore the interface to the transceiver 230 exposes an analog interface.

In receive direction of the signal paths, the transceiver 230 is responsible for upconverting the signal provided by the calibration signal generator 207 to the receive frequency of the signal paths, i.e. the receive frequency of the RF front-ends 221, 222, 223 and the transceivers 218, 219, 220. The upconverted calibration signal is then provided to the splitter/combiner 225. The splitter/combiner 225 which - in the context of receiver calibration -splits the upconverted calibration signal into a number of calibration signals. The directional couplers 212, 213, 214 couple the calibration signals into the receive sections of the respective signal paths. In an alternative implementation, the splitter/combiner 225 may be replaced by a switch or a switch network. In this case, calibration is performed sequentially with the signal paths.

As well as for the transceiver 230, it is assumed here that the receivers and transmitters in the transceivers 218, 219, 220 contain means for converting the signal from analog to digital domain, e.g. analog-to-digital converters, and that the interface to the signal processor 215 is a digital interface. It is understood, that alternatively the interfaces of the transceivers 218, 219, 220 towards the signal processor 215 may be analog interfaces, and the signal processor 215 may include the analog-to-digital converters.

Further, it is assumed that combining (with beamforming) the different signals from the signal paths takes place in the digital domain. In this case, the splitter/combiner 217 takes the signals from the different transceivers 218, 219, 220, performs a respective phase shift and amplitude scaling, accordingly, prior to adding the different received signals.

The splitter/combiner 217 for combining signals takes n input signals, where each signal is provided as digital baseband signal represented by its in-phase and quadrature component. The splitter/combiner 217 multiplies each component i by a complex weight $w\_i$, where the amplitude of $w\_i$ scales the amplitude of the i-th received signal and the phase of the weight rotates the phase of the i-th received signal, respectively. The beamformed or weighted signals are then summed. Splitting may be performed analogously in the reverse direction.

If calibration signals 211 are injected by signal generator 226 in the receive direction, the signals of the single signal paths may be provided by splitter/combiner 217 to signal analyzer 229. The signals received by the signal analyzer 229 will comprise operational signals overlaid with the calibration signals 211. As will be seen below, signal analysis may then e.g. be performed using correlators in the signal analyzer 229. The same applies in transmit direction, where calibration signals 208 are injected by signal generator 227 and provided by transceiver 230 to signal analyzer 228. While only a single signal is provided by transceiver 230 to signal analyzer 228, the same analysis principle using correlators may be used to determine the path characteristics.

The path characteristics in receive and transmit direction may refer to a phase offset and/or an amplitude offset, and a delay for the respective signal path.

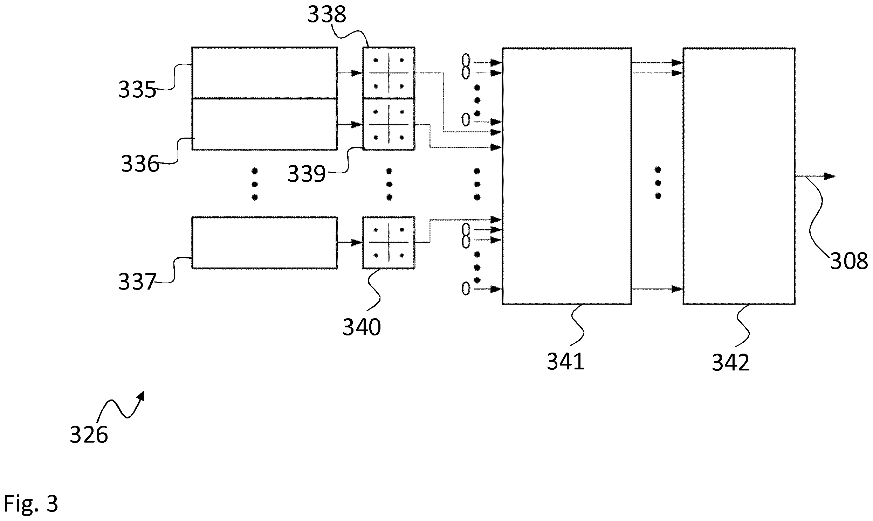

Fig. 3 shows a block diagram of an embodiment of a signal generator 326. The signal generator 326 may be used in any embodiment of the beamforming antenna 100, 200 for generating the calibration signal 308 for performing characterization in receive or transmit direction. It is understood, that in the calibration signal generator, a plurality of the signal generators 326 may be provided, e.g. one for each calibration signal that is to be generated.

The signal generator 326 comprises a plurality of calibration sub-signal generators 335, 336, 337, e.g. one for each sub-carrier that has to be provided with a calibration sub-signal. The calibration sub-signal generators 335, 336, 337 are each coupled to a respective constellation mapper 338, 339, 340. The constellation mappers 338, 339, 340 are further coupled to a multi-carrier modulator 341 and the multi-carrier modulator 341 is coupled to a parallel-to-serial converter 342.

The calibration sub-signal generators 335, 336, 337 each generate a respective calibration sub-signal in the frequency domain, and may e.g. be implemented a pseudo random bit generator that provides the respective signal stream. The calibration sub-signals may especially be provided as mutually independent signal streams. The constellation mappers 338, 339, 340 map the respective signal streams to respective constellation symbols. The multi-carrier modulator 341, then multi-carrier modulates the mutually independent signal streams for the respective calibration signal. The multi-carrier modulator 341 may e.g. perform an inverse Fourier Transform, e.g. an iFFT.

It is understood, that not all sub-carriers of the calibration signal 308 need to be provided with a calibration sub-signal. The input for such sub-carriers may be set to zero. The output of the multi-carrier modulator 341 is then converted into a serial stream and output as calibration signal 308 in the time domain by parallel-to-serial converter 342. The parallel-to-serial converter 342 further may add cyclic prefixes to the serial stream prior to outputting the serial stream as calibration signal 308.

The signal generator 326 may generate the single calibration sub-signals with a predetermined power level. The power level may e.g. equal the power level of operative signals in the beamforming antenna for sub-carriers that are not used by operative signals. The power level may e.g. be lower than the power level of operative signals for sub-carriers that are used by operative signals. The power level may in these cases e.g. be below a noise-level in the communication system. Such signals do not mask the operational signals and may e.g. be analyzed using correlation techniques.

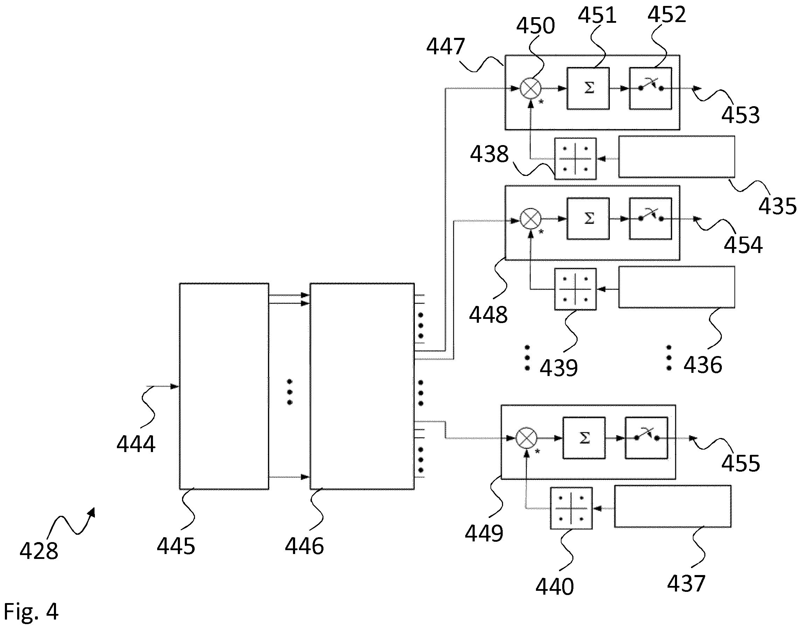

Fig. 4 shows a block diagram of an embodiment of a signal analyzer 428. The signal analyzer may be used to analyze a calibration signal, e.g. the calibration signal 308 as generated by signal generator 326 of Fig. 3 and provide characterizing information about the respective signal path. The characterizing information may e.g. refer to a phase offset and/or an amplitude offset for every sub-carrier in the respective signal path, and/or to a delay for the respective signal path.

The signal analyzer 428 comprises on the input side a serial-to-parallel converter 445. The serial-to-parallel converter 445 is coupled to a multi-carrier demodulator 446. The single outputs of the multi-carrier demodulator 446, i.e. the signal streams for the single sub-carriers, are each coupled to a respective correlator 447, 448, 449. It is understood, that although only three correlators 447, 448, 449 are shown (more hinted at by three dots), a correlator for every sub-carrier that carriers a calibration sub-signal may be provided.

The serial-to-parallel converter 445 converts the received signal 444, that includes the respective calibration signal, after passing the signal path into a parallel signal. The serial-to-parallel converter 445 may also remove cyclic prefixes of the received signal 444, i.e. also the included calibration signal, prior to converting the received signal 444 into a parallel signal. The multi-carrier demodulator 446 then demodulates the respective signals and provides respective frequency domain signals to the correlators 447, 448, 449. The multi-carrier demodulator 446 may e.g. perform a Fourier Transform, e.g. a FFT, on the received signals.

The correlators 447, 448, 449 then correlate the respective frequency domain signals with a copy of the respective one of the calibration sub-signals and output respective path properties 453, 454, 455. With the path properties 453, 454, 455 it is possible to determine the respective phase offset and/or an amplitude offset based on the correlation result. Further, with all path properties 453, 454, 455 at hand it is also possible to determine a delay for the respective signal path.

For every correlator a signal generator 435, 436, 437 is provided that generates the same calibration sub-signals as the calibration sub-signal generator 335, 336, 337. Further, respective constellation mappers 438, 439, 440 are provided that convert the output of the calibration sub-signal generators 335, 336, 337 into respective constellation symbols. The conjugate complex of the constellation symbols (shown with the "*") are then multiplied in the respective correlator by multiplier 450 with the incoming signal. The result of the multiplication is summed up and output by output switch 452 in intervals that correspond to the correlation interval or time.

The correlation output can be expressed as

$$R_k = \sum_l X_k^*(l) \cdot Y_k(l) \,,$$

$$= L \cdot \alpha e^{-j(2\pi k \tau \Delta f + \emptyset)} \,,$$

where $k$ is the subcarrier index.

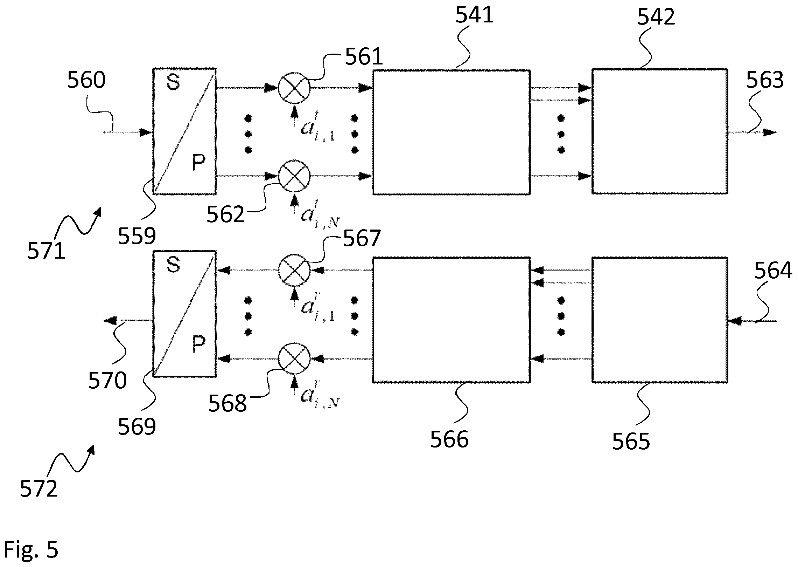

Fig. 5 shows block diagrams of the digital sections of signal paths 571, 572 for use with a beamforming antenna according to the present invention. The signal path 571 is a transmit signal path and the signal path 572 is a receive signal path.

The signal path 571 comprises on the input side a serial-to-parallel converter 559 that is coupled to a multi-carrier modulator 541. The multi-carrier modulator 541 is coupled to a parallel-to-serial converter 542. During operation the serial-to-parallel converter 559 converts an incoming signal stream into a parallel signal that is converted into the time-domain by multi-carrier modulator 541 and then converted to a serial stream, i.e. a signal in the time domain, by serial-to-parallel converter 559.

For adjusting the characteristics of the signal path regarding amplitude and phase, single compensators 561, 562 are provided for every sub-carrier between the serial-to-parallel converter 559 and the multi-carrier modulator 541.

The signal path 572 comprises on the input side a serial-to-parallel converter 565. The output of the serial-to-parallel converter 565 is provided to a multi-carrier demodulator 566 that is coupled to a parallel-to-serial converter 569. The serial-to-parallel converter 565 converts the received time-domain signal 564 into a parallel stream. The multi-carrier demodulator 566 then demodulates, i.e. converts into the frequency domain, the parallel signal stream, e.g. by performing a Fourier Transform or FFT and provides the output to the parallel-to-serial converter 569 that outputs a frequency-domain serial signal 570.

For adjusting the characteristics of the signal path regarding amplitude and phase, single compensators 567, 568 are provided for every sub-carrier between multi-carrier demodulator 566 and the parallel-to-serial converter 569.

Amplitudes and phases of each sub-carrier can be compensated for in the frequency-domain, i.e. before modulation or after demodulation. Correction for each subcarrier index j, where 1≤j≤L of the i-th transceiver in transmit direction is performed by multiplying each signal before the inverse Fourier Transform by a corresponding correction value $a^t_{i,j}$, where the complex values $a^t_{i,j}$ include the phase and gain to be corrected. Likewise, correction for each subcarrier index j, where $1 \leq j \leq L$ of the i-th transceiver in receive direction is performed by multiplying each signal after the Fourier Transform by a corresponding correction value $a^r_{i,j}$, where the complex values $a^r_{i,j}$ include the phase and gain to be corrected.

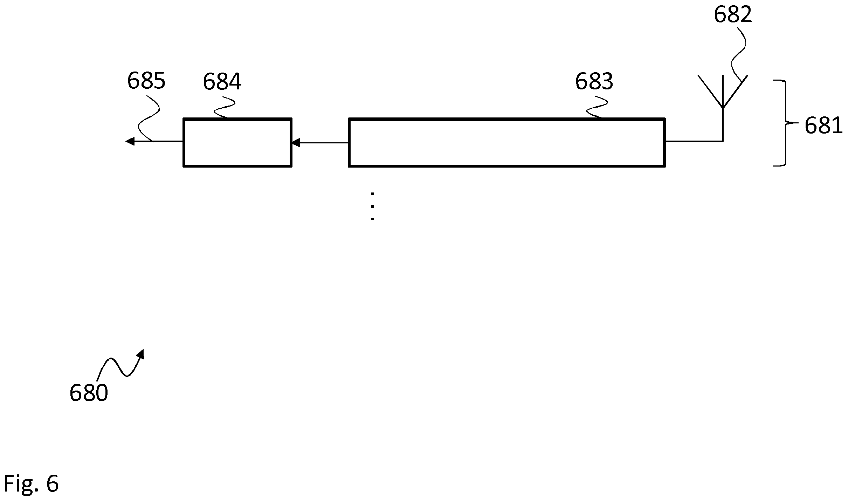

Fig. 6 shows a block diagram of a measurement device 680. The measurement device 680 may be used to measure channel properties of a wireless communication channel based on signals received via the communication channel. The measurement device 680 may be used with a beamforming antenna according to the present invention that emits signals that comprise respective calibration signals.

The measurement device 680 comprises a receiving signal path 681, although more receiving signal paths are possible. The receiving signal path 681 comprising at least an antenna element 682 and a corresponding receiver 683. A signal analyzer 684 is coupled to the receiving path 681 and analyses received signals for the receiving signal path 681. It is understood, that the signal analyzer may also analyze the signals of multiple signal paths if present. The signal analyzer for example determines for at least one of the sub-carriers based on calibration sub-signals provided in the respective sub-carriers in the respective received signal a phase offset and/or an amplitude offset. The mechanics for determining the phase offset and an amplitude offset are explained above with regard to the signal analyzer and the compensators. The signal analyzer may also determine based on calibration sub-signals provided in the respective sub-carriers in the respective received signal a delay for the communication channel, e.g. by determining the slope of the estimated sub-carrier correlation values either by differentiation or curve-fitting.

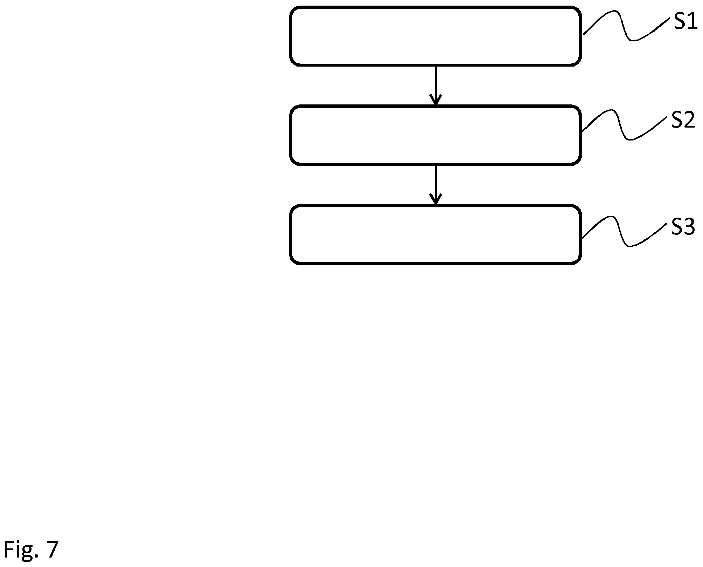

For sake of clarity in the following description of the method-based Fig. 7 the reference signs used above in the description of apparatus-based Figs. 1 - 6 will be maintained.

Fig. 7 shows a flow diagram of an embodiment of a method for operating a beamforming antenna 100, 200 with multiple signal paths 101, 102, 103, 571, 572 for multi-carrier transmission with multiple sub-carriers.

The method comprises generating S1 a calibration sub-signal in each one of a number of the sub-carriers for a number of the signal paths 101, 102, 103, 571, 572 in the frequency domain, combining S2 the generated calibration sub-signals that relate to a single one of the signal paths 101, 102, 103, 571, 572 in a calibration signal 108, 109, 110, 111, 208, 211, 308 for the respective signal path 101, 102, 103, 571, 572 respectively, and supplying S3 the calibration signals 108, 109, 110, 111, 208, 211, 308 to the respective signal paths 101, 102, 103, 571, 572.

With the above method steps, it is possible to provide in the beamforming antenna 100, 200 calibration signals 108, 109, 110, 111, 208, 211, 308. The calibration signals 108, 109, 110, 111, 208, 211, 308 may then be analyzed internally to characterize the properties of the single signal paths 101, 102, 103, 571, 572 in the beamforming antenna 100, 200. Further, the calibration signals 108, 109, 110, 111, 208, 211, 308 may also be analyzed externally, e.g. with a measurement device 680, e.g. to characterize a channel in a communication system.

The beamforming antenna 100, 200 may comprise in every signal path 101, 102, 103, 571, 572 a signal processor 215 and a transceiver 218, 219, 220, 230 and an antenna element 104, 105, 106, 204, 205, 206, wherein the signal processor 215 is coupled to the respective transceiver 218, 219, 220, 230, and the transceiver 218, 219, 220, 230 is coupled to the respective antenna element 104, 105, 106, 204, 205, 206. Depending on whether the signal paths 101, 102, 103, 571, 572 are to be characterized in transmit or receive direction or whether a channel is to be characterized, the method may comprise generating a dedicated calibration signal 108, 109, 110, 111, 208, 211, 308 for every signal path 101, 102, 103, 571, 572 and coupling the calibration signal 108, 109, 110, 111, 208, 211, 308 into the respective signal paths 101, 102, 103, 571, 572 via the signal processor 215, or generating a single calibration signal 108, 109, 110, 111, 208, 211, 308 for all signal paths 101, 102, 103, 571, 572 and coupling the single calibration signal 108, 109, 110, 111, 208, 211, 308 into the signal paths 101, 102, 103, 571, 572, especially at the antenna element 104, 105, 106, 204, 205, 206 or a signal line between the antenna elements 104, 105, 106, 204, 205, 206 and the respective transceivers 218, 219, 220, 230.

The method comprises when generating the calibration sub-signals, generating a signal stream for each one of the calibration sub-signals, wherein the signal streams are mutually independent orthogonal signal streams or quasi-orthogonal signal streams, and mapping the generated signal streams in each case to constellation symbols, and comprising performing a multi-carrier modulation based on the constellation symbols, and converting the output of the multi-carrier modulation into a serial stream, wherein the serial stream represents the calibration signal 108, 109, 110, 111, 208, 211, 308 in the time domain.

Further, the method may comprise when generating the calibration sub-signals generating the single calibration sub-signals with a predetermined power level, especially with a power level that equals the power level of operative signals in the beamforming antenna 100, 200 and/or with a power level that is lower than the power level of operative signals in the beamforming antenna 100, 200. The calibration sub-signals with a power level that equals the power level of operative signals may be provided for sub-carriers that are not used by operative signals, and the calibration sub-signals with a power level that is lower than the power level of the operative signals may be provided for sub-carriers that are used by operative signals.

The method may also comprise for each one of the calibration signals 108, 109, 110, 111, 208, 211, 308 analyzing the respective calibration signal 108, 109, 110, 111, 208, 211, 308 after passing the respective signal path 101, 102, 103, 571, 572 and determining for every sub-carrier in the respective signal path 101, 102, 103, 571, 572 a phase offset and/or an amplitude offset, and/or determining a delay for the respective signal path 101, 102, 103, 571, 572. Note that any delay or latency in the signal path, due to the properties of the Fourier transform, correspond to a linear decreasing phase in the frequency domain and may be estimated by determining the slope of the estimated sub-carrier correlation values either by differentiation or by curve-fitting. For each one of the sub-carriers the method may comprise compensating in the frequency domain the phase offset and/or amplitude offset for the sub-carriers in the respective signal path 101, 102, 103, 571, 572, and compensating the delay for the respective signal path 101, 102, 103, 571, 572, especially, wherein compensating comprises multiplying the respective signals in the respective sub-carriers in the frequency domain with a respective complex compensation value $a^t_{i,j}$.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims

**List of reference signs**

| | |
|---|---|
| 100, 200 | beamforming antenna |
| 101, 102, 103 | signal path |
| 104, 105, 106, 204, 205, 206 | antenna element |
| 107, 207 | calibration signal generator |
| 108, 109, 110, 111, 208, 211, 308 | calibration signal |
| 112, 113, 114, 115, 212, 213, 214 | supply element |
| 215 | signal processor |
| 216 | interface unit |
| 217 | beamforming splitter/combiner |
| 218, 219, 220, 230 | transceiver |
| 221, 222, 223 | RF front-end |
| 224 | clock source |
| 225 | splitter/combiner |
| 226, 227, 326 | signal generator |
| 228, 229, 428 | signal analyzer |
| 335, 336, 337, 435, 436, 437 | calibration sub-signal generator |
| 338, 339, 340, 438, 439, 440 | constellation mapper |
| 341, 541 | multi-carrier modulator |
| 342, 542, 596 | parallel-to-serial converter |
| 444 | input signal |
| 445 | serial-to-parallel converter |
| 446 | multi-carrier demodulator |
| 447, 448, 449 | correlator |
| 450 | multiplier |
| 451 | accumulator |
| 452 | output switch |
| 453, 454, 455 | path properties |
| 559 | frequency domain input signal |
| 560, 565 | serial-parallel-converter |
| 561, 562, 567, 568 | compensator |
| 563 | time domain output signal |
| 564 | time domain input signal |

| 566 | multi-carrier demodulator |
| 569 | parallel-serial converter |
| 570 | frequency domain output signal |
| 571, 572 | signal path |
| $a^t_{i,N}$, $a^r_{i,N}$ | complex compensation value |
| 680 | measurement device |
| 681 | receiving signal path |
| 682 | antenna element |
| 683 | receiver |
| 684 | signal analyzer |
| 685 | channel properties |
| S1, S2, S3 | method steps |

**Claims**

1. Beamforming antenna (100, 200) for multi-carrier transmission with multiple sub-carriers, the beamforming antenna (100, 200) comprising:

a number of signal paths (101, 102, 103, 571, 572) configured to transmit and receive communication signals, a calibration signal generator (107, 207) that is configured to generate for the signal paths (101, 102, 103, 571, 572) a number of calibration signals (108, 109, 110, 111, 208, 211, 308) with the sub-carriers of the multi-carrier transmission in the frequency domain, the calibration signals (108, 109, 110, 111, 208, 211, 308) comprising a calibration sub-signal in at least one of the sub-carriers of the respective calibration signal (108, 109, 110, 111, 208, 211, 308), and a supply element (112, 113, 114, 115, 212, 213, 214) configured to supply the calibration signals (108, 109, 110, 111, 208, 211, 308) to the respective signal paths (101, 102, 103, 571, 572);
**characterized in that**
when generating a calibration signal (108, 109, 110, 111, 208, 211, 308), the calibration signal generator (107, 207) is configured to generate for each one of the calibration sub-signals a signal stream, wherein the signal streams are mutually independent orthogonal signal streams or quasi-orthogonal signal streams, and to map the generated signal streams in each case to constellation symbols, and to perform a multi-carrier modulation based on the constellation symbols, and to convert the output of the multi-carrier modulation into a serial stream, wherein the serial stream represents the calibration signal (108, 109, 110, 111, 208, 211, 308) in the time domain.

2. Beamforming antenna (100, 200) according to claim 1, comprising in every signal path (101, 102, 103, 571, 572) a signal processor (215) and a transceiver (218, 219, 220, 230) and an antenna element (104, 105, 106, 204, 205, 206), wherein the signal processor (215) is coupled to the respective transceiver (218, 219, 220, 230), and the transceiver (218, 219, 220, 230) is coupled to the respective antenna element (104, 105, 106, 204, 205, 206), wherein the calibration signal generator (107, 207) is configured to generate a dedicated calibration signal (108, 109, 110, 111, 208, 211, 308) for every signal path (101, 102, 103, 571, 572) and to couple the calibration signal (108, 109, 110, 111, 208, 211, 308) into the respective signal paths (101, 102, 103, 571, 572) via the signal processor (215), or wherein the calibration signal generator (107, 207) is configured to generate a single calibration signal (108, 109, 110, 111, 208, 211, 308) for all signal paths (101, 102, 103, 571, 572) and to couple the single calibration signal (108, 109, 110, 111, 208, 211, 308) into the signal paths (101, 102, 103, 571, 572), especially at the antenna element (104, 105, 106, 204, 205, 206) or a signal line between the antenna elements (104, 105, 106, 204, 205, 206) and the respective transceivers (218, 219, 220, 230).

3. Beamforming antenna (100, 200) according to claim 1, wherein the calibration signal generator (107, 207) is configured to generate the single calibration sub-signals with a predetermined power level, especially with a power level that equals the power level of operative signals in the beamforming antenna (100, 200) or with a power level that is lower than the power level of operative signals in the beamforming antenna (100, 200), and wherein the calibration signal generator (107, 207) is configured to provide the calibration sub-signals with a power level that equals the power level of operative signals in sub-carriers that are not used by operative signals, and wherein the calibration signal generator (107, 207) is configured to provide the calibration sub-signals with a power level that is lower than the power level of operative signals in sub-carriers that are used by operative signals.

4. Beamforming antenna (100, 200) according to claim 3, wherein the calibration signal generator (107, 207) comprises for each one of the mutually independent signal streams a calibration sub-signal generator (335, 336, 337, 435, 436, 437), especially a pseudo random bit generator, configured to generate the respective signal stream.

5. Beamforming antenna (100, 200) according to claim 3 or 4, wherein the calibration signal generator (107, 207) comprises for each one of the mutually independent signal streams a constellation mapper (338, 339, 340, 438, 439, 440) configured to map the respective signal stream to respective constellation symbols.

6. Beamforming antenna (100, 200) according to any one of claims 3 to 5, wherein the calibration signal generator (107, 207) comprises for each one of the calibration signals (108, 109, 110, 111, 208, 211, 308) a multi-carrier modulator (341, 541) configured to multi-carrier modulate the mutually independent signal streams of the respective calibration signal (108, 109, 110, 111, 208, 211, 308).

7. Beamforming antenna (100, 200) according to claim 6, wherein the calibration signal generator (107, 207) comprises for each one of the calibration signals (108, 109, 110, 111, 208, 211, 308) a parallel-to-serial converter (342) configured to convert the output of the multi-carrier modulator (341, 541) into a serial stream and output the serial stream as a calibration signal (108, 109, 110, 111, 208, 211, 308) in the time domain, and especially to add cyclic prefixes to the serial stream prior to outputting the serial steam as a calibration signal (108, 109, 110, 111, 208, 211, 308).

8. Beamforming antenna (100, 200) according to any one of the preceding claims, comprising for each one of the calibration signals (108, 109, 110, 111, 208, 211, 308) a signal analyzer (228, 229, 428) configured to analyze the calibration signals (108, 109, 110, 111, 208, 211, 308) after passing the signal paths (101, 102, 103, 571, 572) and configured to determine for every sub-carrier in the respective signal path (101, 102, 103, 571, 572) a phase offset and/or an amplitude offset, and/or to determine a delay for the respective signal path (101, 102, 103, 571, 572).

9. Beamforming antenna (100, 200) according to claim 8, comprising for each one of the sub-carriers a compensator (561,562, 567, 568) that is configured to compensate in the frequency domain the phase offset and/or amplitude offset for the sub-carriers in the respective signal path (101, 102, 103, 571, 572), and to compensate the delay for the respective signal path (101, 102, 103, 571, 572).

10. Beamforming antenna (100, 200) according to claim 9, wherein the compensator (561,562, 567, 568) is configured to multiply the respective signals in the respective sub-carriers in the frequency domain with a respective complex compensation value ($a^t_{i,N}$).

11. Beamforming antenna (100, 200) according to any one of claims 8 to 10, wherein each one of the signal analyzers (228, 229, 428) comprises a serial-to-parallel converter (445) configured to convert the respective calibration signal (108, 109, 110, 111, 208, 211, 308) after passing the signal path (101, 102, 103, 571, 572) into a parallel signal, and especially to remove cyclic prefixes of the calibration signal (108, 109, 110, 111, 208, 211, 308) prior to converting the calibration signal (108, 109, 110, 111, 208, 211, 308) into a parallel signal.

12. Beamforming antenna (100, 200) according to any one of claims 8 to 11, wherein each one of the signal analyzers (228, 229, 428) comprises a multi-carrier demodulator (446) configured to demodulate the respective calibration signal (108, 109, 110, 111, 208, 211, 308) after passing the signal path (101, 102, 103, 571, 572) and provide respective frequency domain signals, especially to demodulate the respective calibration signal (108, 109, 110, 111, 208, 211, 308) based on a Fourier Transform of the respective calibration signal (108, 109, 110, 111, 208, 211, 308).

13. Beamforming antenna (100, 200) according to any one of claims 8 to 12, wherein each one of the signal analyzers (228, 229, 428) comprises for each one of the calibration sub-signals a correlator (447, 448, 449) configured to correlate a respective frequency domain signal with the respective one of the calibration sub-signals and to determine the respective phase offset and/or an amplitude offset based on the correlation result, and/or to determine a delay for the respective signal path (101, 102, 103, 571, 572) based on the correlation results of all sub-carriers.

14. Method for operating a beamforming antenna (100, 200) with multiple signal paths (101, 102, 103, 571, 572) for multi-carrier transmission with multiple sub-carriers, the method comprising:

generating (S1) a calibration sub-signal in each one of a number of the sub-carriers for a number of the signal paths (101, 102, 103, 571, 572) in the frequency domain, combining (S2) the generated calibration sub-signals that relate to a single one of the signal paths (101, 102, 103, 571, 572) in a calibration signal (108, 109, 110, 111, 208, 211, 308) for the respective signal path (101, 102, 103, 571, 572) respectively, and supplying (S3) the calibration signals (108, 109, 110, 111, 208, 211, 308) to the respective signal paths (101, 102, 103, 571, 572);
**characterized in that**
generating (S1) the calibration sub-signals comprises generating a signal stream for each one of the calibration sub-signals, wherein the signal streams are mutually independent orthogonal signal streams or quasi-orthogonal signal streams, and mapping the generated signal streams in each case to constellation symbols, and comprising performing a multi-carrier modulation based on the constellation symbols, and converting the output of the multi-carrier modulation into a serial stream, wherein the serial stream represents the calibration signal (108, 109, 110, 111, 208, 211, 308) in the time domain..

15. Method according to claim 14, the beamforming antenna (100, 200) comprising in every signal path (101, 102, 103, 571, 572) a signal processor (215) and a transceiver (218, 219, 220, 230) and an antenna element (104, 105, 106, 204, 205, 206), wherein the signal processor (215) is coupled to the respective transceiver (218, 219, 220, 230), and the transceiver (218, 219, 220, 230) is coupled to the respective antenna element (104, 105, 106, 204, 205, 206), the method comprising:

generating a dedicated calibration signal (108, 109, 110, 111, 208, 211, 308) for every signal path (101, 102, 103, 571, 572) and coupling the calibration signal (108, 109, 110, 111, 208, 211, 308) into the respective signal paths (101, 102, 103, 571, 572) via the signal processor (215), or
generating a single calibration signal (108, 109, 110, 111, 208, 211, 308) for all signal paths (101, 102, 103, 571, 572) and coupling the single calibration signal (108, 109, 110, 111, 208, 211, 308) into the signal paths (101, 102, 103, 571, 572), especially at the antenna element (104, 105, 106, 204, 205, 206) or a signal line between the antenna elements (104, 105, 106, 204, 205, 206) and the respective transceivers (218, 219, 220, 230).

16. Method according to any one of the preceding claims 14 and 15, comprising when generating the calibration sub-signals generating the single calibration sub-signals with a predetermined power level, especially with a power level that equals the power level of operative signals in the beamforming antenna (100, 200) and/or with a power level that is lower than the power level of operative signals in the beamforming antenna (100, 200), and wherein the calibration sub-signals with a power level that equals the power level of operative signals are provided for sub-carriers that are not used by operative signals, and wherein the calibration sub-signals with a power level that is lower than the power level of the operative signals are provided for sub-carriers that are used by operative signals.

17. Method according to any one of the preceding claims 14 to 16, comprising for each one of the calibration signals (108, 109, 110, 111, 208, 211, 308) analyzing the respective calibration signal (108, 109, 110, 111, 208, 211, 308) after passing the respective signal path (101, 102, 103, 571, 572) and determining for every sub-carrier in the respective signal path (101, 102, 103, 571, 572) a phase offset and/or an amplitude offset, and/or determining a delay for the respective signal path (101, 102, 103, 571, 572).

18. Method according to claim 17, comprising for each one of the sub-carriers compensating in the frequency domain the phase offset and/or amplitude offset for the sub-carriers in the respective signal path (101, 102, 103, 571, 572), and compensating the delay for the respective signal path (101, 102, 103, 571, 572), especially, wherein compensating comprises multiplying the respective signals in the respective sub-carriers in the frequency domain with a respective complex compensation value ($a^t_{i,N}$).

**Patentansprüche**

1. Strahlformungsantenne (100, 200) für Mehrträgerübertragung mit mehreren Unterträgern, wobei die Strahlformungsantenne (100, 200) aufweist:

eine Anzahl von Signalwegen (101, 102, 103, 571, 572), die zum Senden und Empfangen von Kommunikationssignalen konfiguriert sind,
einen Kalibriersignalgenerator (107, 207), der so konfiguriert ist, dass er für die Signalpfade (101, 102, 103, 571, 572) eine Anzahl von Kalibriersignalen (108, 109, 110, 111, 208, 211, 308) mit den Unterträgern der Mehrträgerübertragung im Frequenzbereich erzeugt, wobei die Kalibriersignale (108, 109, 110, 111, 208, 211, 308) ein Kalibriersubsignal in mindestens einem der Unterträger des jeweiligen Kalibriersignals (108, 109, 110, 111, 208, 211, 308) aufweisen, und

ein Versorgungselement (112, 113, 114, 115, 212, 213, 214), das so konfiguriert ist, dass es die Kalibriersignale (108, 109, 110, 111, 208, 211, 308) an die jeweiligen Signalwege (101, 102, 103, 571, 572) liefert;

**dadurch gekennzeichnet, dass**

beim Erzeugen eines Kalibriersignals (108, 109, 110, 111, 208, 211, 308) der Kalibriersignalgenerator (107, 207) so konfiguriert ist, dass er für jedes der Kalibriersubsignale einen Signalstrom erzeugt, wobei die Signalströme voneinander unabhängige orthogonale Signalströme oder quasi-orthogonale Signalströme sind, und die erzeugten Signalströme jeweils auf Konstellationssymbole abzubilden, und auf Basis der Konstellationssymbole eine Mehrträgermodulation durchzuführen, und den Ausgang der Mehrträgermodulation in einen seriellen Strom umzuwandeln, wobei der serielle Strom das Kalibrierungssignal (108, 109, 110, 111, 208, 211, 308) im Zeitbereich repräsentiert.

2. Strahlformungsantenne (100, 200) gemäß Anspruch 1, die in jedem Signalpfad (101, 102, 103, 571, 572) einen Signalprozessor (215) und einen Transceiver (218, 219, 220, 230) sowie ein Antennenelement (104, 105, 106, 204, 205, 206) aufweist, wobei der Signalprozessor (215) mit dem jeweiligen Transceiver (218, 219, 220, 230) gekoppelt ist, und der Transceiver (218, 219, 220, 230) mit dem jeweiligen Antennenelement (104, 105, 106, 204, 205, 206) gekoppelt ist,

wobei der Kalibriersignalgenerator (107, 207) ausgebildet ist, für jeden Signalpfad (101, 102, 103, 571, 572) ein eigenes Kalibriersignal (108, 109, 110, 111, 208, 211, 308) zu erzeugen und das Kalibriersignal (108, 109, 110, 111, 208, 211, 308) über den Signalprozessor (215) in die jeweiligen Signalpfade (101, 102, 103, 571, 572) einzukoppeln, oder wobei der Kalibriersignalgenerator (107, 207) so konfiguriert ist, dass er ein einziges Kalibriersignal (108, 109, 110, 111, 208, 211, 308) für alle Signalwege (101, 102, 103, 571, 572) erzeugt und das einzige Kalibriersignal (108, 109, 110, 111, 208, 211, 308) in die Signalwege (101, 102, 103, 571, 572) einzukoppeln, insbesondere am Antennenelement (104, 105, 106, 204, 205, 206) oder einer Signalleitung zwischen den Antennenelementen (104, 105, 106, 204, 205, 206) und den jeweiligen Transceivern (218, 219, 220, 230).

3. Strahlformungsantenne (100, 200) gemäß Anspruch 1, wobei der Kalibriersignalgenerator (107, 207) so konfiguriert ist, dass er die einzelnen Kalibriersubsignale mit einem vorbestimmten Leistungspegel erzeugt, insbesondere mit einem Leistungspegel, der dem Leistungspegel von Betriebssignalen in der Strahlformungsantenne (100, 200) entspricht oder mit einem Leistungspegel, der niedriger ist als der Leistungspegel von Betriebssignalen in der Strahlformungsantenne (100, 200), und

wobei der Kalibriersignalgenerator (107, 207) so konfiguriert ist, dass er die Kalibrierungssubsignale mit einem Leistungspegel bereitstellt, der gleich dem Leistungspegel von operativen Signalen in Unterträgern ist, die nicht von operativen Signalen verwendet werden, und wobei der Kalibriersignalgenerator (107, 207) so konfiguriert ist, dass er die Kalibrierungssubsignale mit einem Leistungspegel bereitstellt, der niedriger ist als der Leistungspegel von operativen Signalen in Unterträgern, die von operativen Signalen verwendet werden.

4. Strahlformungsantenne (100, 200) gemäß Anspruch 3, wobei der Kalibriersignalgenerator (107, 207) für jeden der voneinander unabhängigen Signalströme einen Kalibrierungsuntersignalgenerator (335, 336, 337, 435, 436, 437), insbesondere einen Pseudozufallsbitgenerator, aufweist, der so konfiguriert ist, dass er den jeweiligen Signalstrom erzeugt.

5. Strahlformungsantenne (100, 200) gemäß Anspruch 3 oder 4, wobei der Kalibrierungssignalgenerator (107, 207) für jeden der voneinander unabhängigen Signalströme einen Konstellationsabbildner (338, 339, 340, 438, 439, 440) aufweist, der so konfiguriert ist, dass er den jeweiligen Signalstrom auf jeweilige Konstellationssymbole abbildet.

6. Strahlformungsantenne (100, 200) gemäß einem der Ansprüche 3 bis 5, wobei der Kalibriersignalgenerator (107, 207) für jedes der Kalibriersignale (108, 109, 110, 111, 208, 211, 308) einen Mehrträgermodulator (341, 541) aufweist, der so konfiguriert ist, dass er die voneinander unabhängigen Signalströme des jeweiligen Kalibriersignals (108, 109, 110, 111, 208, 211, 308) mehrträgermoduliert.

7. Strahlformungsantenne (100, 200) gemäß Anspruch 6, wobei der Kalibriersignalgenerator (107, 207) für jedes der Kalibriersignale (108, 109, 110, 111, 208, 211, 308) einen Parallel-Seriell-Wandler (342) aufweist, der konfiguriert ist, den Ausgang des Mehrträgermodulators (341, 541) in einen seriellen Strom umzuwandeln und den seriellen Strom als Kalibriersignal (108, 109, 110, 111, 208, 211, 308) im Zeitbereich auszugeben, und insbesondere zyklische Präfixe zu dem seriellen Strom vor der Ausgabe des seriellen Stroms als Kalibriersignal (108, 109, 110, 111, 208, 211, 308) hinzuzufügen.

8.  Strahlformungsantenne (100, 200) gemäß einem der vorhergehenden Ansprüche, die für jedes der Kalibriersignale (108, 109, 110, 111, 208, 211, 308) einen Signalanalysator (228, 229, 428) aufweist, der konfiguriert ist, um die Kalibriersignale (108, 109, 110, 111, 208, 211, 308) zu analysieren, nachdem sie die Signalpfade (101, 102, 103, 571, 572) durchlaufen haben, und konfiguriert ist, um für jeden Unterträger in dem jeweiligen Signalpfad (101, 102, 103, 571, 572) einen Phasenversatz und/oder einen Amplitudenversatz zu bestimmen, und/oder um eine Verzögerung für den jeweiligen Signalpfad (101, 102, 103, 571, 572) zu bestimmen.

9.  Strahlformungsantenne (100, 200) gemäß Anspruch 8, die für jeden der Unterträger einen Kompensator (561, 562, 567, 568) aufweist, der so konfiguriert ist, dass er im Frequenzbereich den Phasenversatz und/oder den Amplitudenversatz für die Unterträger im jeweiligen Signalpfad (101, 102, 103, 571, 572) kompensiert, und dass er die Verzögerung für den jeweiligen Signalpfad (101, 102, 103, 571, 572) kompensiert.

10. Strahlformungsantenne (100, 200) gemäß Anspruch 9, wobei der Kompensator (561, 562, 567, 568) so konfiguriert ist, dass er die jeweiligen Signale in den jeweiligen Unterträgern im Frequenzbereich mit einem jeweiligen komplexen Kompensationswert ($a^t_{i,\ N}$) multipliziert.

11. Strahlformungsantenne (100, 200) gemäß einem der Ansprüche 8 bis 10, wobei jeder der Signalanalysatoren (228, 229, 428) einen Seriell-Parallel-Umsetzer (445) aufweist, der so konfiguriert ist, das jeweilige Kalibriersignal (108, 109, 110, 111, 208, 211, 308) nach Durchlaufen des Signalpfades (101, 102, 103, 571, 572) in ein paralleles Signal umzuwandeln, und insbesondere zyklische Präfixe des Kalibriersignals (108, 109, 110, 111, 208, 211, 308) vor der Umwandlung des Kalibriersignals (108, 109, 110, 111, 208, 211, 308) in ein paralleles Signal zu entfernen.

12. Strahlformungsantenne (100, 200) gemäß einem der Ansprüche 8 bis 11, wobei jeder der Signalanalysatoren (228, 229, 428) einen Mehrträger-Demodulator (446) aufweist, der so konfiguriert ist, das jeweilige Kalibriersignal (108, 109, 110, 111, 208, 211, 308) nach dem Durchlaufen des Signalpfades (101, 102, 103, 571, 572) zu demodulieren und entsprechende Frequenzbereichssignale bereitzustellen, insbesondere um das jeweilige Kalibriersignal (108, 109, 110, 111, 208, 211, 308) basierend auf einer FourierTransformation des jeweiligen Kalibriersignals (108, 109, 110, 111, 208, 211, 308) zu demodulieren.

13. Strahlformungsantenne (100, 200) gemäß einem der Ansprüche 8 bis 12, wobei jeder der Signalanalysatoren (228, 229, 428) für jedes der Kalibrierungssub-Signale einen Korrelator (447, 448, 449) umfasst, der so konfiguriert ist, dass er ein jeweiliges Frequenzbereichssignal mit dem jeweiligen Kalibrierungssub-Signal korreliert und den jeweiligen Phasenoffset und/oder einen Amplitudenoffset auf der Grundlage des Korrelationsergebnisses bestimmt und/oder eine Verzögerung für den jeweiligen Signalpfad (101, 102, 103, 571, 572) auf der Grundlage der Korrelationsergebnisse aller Sub-Träger bestimmt.

14. Verfahren zum Betreiben einer Strahlformungsantenne (100, 200) mit mehreren Signalpfaden (101, 102, 103, 571, 572) für eine Mehrträgerübertragung mit mehreren Unterträgern, wobei das Verfahren aufweist:

    Erzeugen (S1) eines Kalibriersubsignals in jedem einer Anzahl der Unterträger für eine Anzahl der Signalwege (101, 102, 103, 571, 572) im Frequenzbereich,
    Kombinieren (S2) der erzeugten Kalibrierungssub-Signale, die sich auf einen einzelnen der Signalpfade (101, 102, 103, 571, 572) beziehen, in einem Kalibriersignal (108, 109, 110, 111, 208, 211, 308) für den jeweiligen Signalpfad (101, 102, 103, 571, 572), und
    Zuführen (S3) der Kalibriersignale (108, 109, 110, 111, 208, 211, 308) an die jeweiligen Signalpfade (101, 102, 103, 571, 572);
    **dadurch gekennzeichnet, dass**
    das Erzeugen (S1) der Kalibrierungssub-Signale das Erzeugen eines Signalstroms für jedes der Kalibrierungssub-Signale aufweist, wobei die Signalströme voneinander unabhängige orthogonale Signalströme oder quasiorthogonale Signalströme sind, und aufweisend das Abbilden der erzeugten Signalströme in jedem Fall auf Konstellationssymbole, und Durchführen einer Mehrträgermodulation auf der Basis der Konstellationssymbole und Umwandeln des Ausgangs der Mehrträgermodulation in einen seriellen Strom, wobei der serielle Strom das Kalibriersignal (108, 109, 110, 111, 208, 211, 308) im Zeitbereich repräsentiert..

15. Verfahren gemäß Anspruch 14, wobei die Strahlformungsantenne (100, 200) in jedem Signalpfad (101, 102, 103, 571, 572) einen Signalprozessor (215) und einen Transceiver (218, 219, 220, 230) und ein Antennenelement (104, 105, 106, 204, 205, 206) aufweist, wobei der Signalprozessor (215) mit dem jeweiligen Transceiver (218, 219, 220, 230) gekoppelt ist und der Transceiver (218, 219, 220, 230) mit dem jeweiligen Antennenelement (104, 105, 106, 204, 205, 206) gekoppelt ist, wobei das Verfahren aufweist:

Erzeugen eines eigenen Kalibriersignals (108, 109, 110, 111, 208, 211, 308) für jeden Signalweg (101, 102, 103, 571, 572) und Einkoppeln des Kalibriersignals (108, 109, 110, 111, 208, 211, 308) in die jeweiligen Signalwege (101, 102, 103, 571, 572) über den Signalprozessor (215), oder

Erzeugen eines einzigen Kalibriersignals (108, 109, 110, 111, 208, 211, 308) für alle Signalwege (101, 102, 103, 571, 572) und Einkoppeln des einzigen Kalibriersignals (108, 109, 110, 111, 208, 211, 308) in die Signalwege (101, 102, 103, 571, 572), insbesondere am Antennenelement (104, 105, 106, 204, 205, 206) oder einer Signalleitung zwischen den Antennenelementen (104, 105, 106, 204, 205, 206) und den jeweiligen Transceivern (218, 219, 220, 230).

16. Verfahren gemäß einem der vorhergehenden Ansprüche 14 und 15, das aufweist, dass beim Erzeugen der Kalibrierungssub-Signale die einzelnen Kalibrierungssub-Signale mit einem vorbestimmten Leistungspegel erzeugt werden, insbesondere mit einem Leistungspegel, der gleich dem Leistungspegel von operativen Signalen in der Strahlformungsantenne (100, 200) ist, und/oder mit einem Leistungspegel, der niedriger ist als der Leistungspegel von operativen Signalen in der Strahlformungsantenne (100, 200), und

wobei die Kalibrierungssub-Signale mit einem Leistungspegel, der gleich dem Leistungspegel der operativen Signale ist, für Unterträger bereitgestellt werden, die nicht von operativen Signalen verwendet werden, und wobei die Kalibrierungssub-Signale mit einem Leistungspegel, der niedriger als der Leistungspegel der operativen Signale ist, für Unterträger bereitgestellt werden, die von operativen Signalen verwendet werden.

17. Verfahren gemäß einem der vorangehenden Ansprüche 14 bis 16, das für jedes der Kalibriersignale (108, 109, 110, 111, 208, 211, 308) eine Analyse des jeweiligen Kalibriersignals (108, 109, 110, 111, 208, 211, 308) nach Durchlaufen des rückwärtigen Signalwegs (101, 102, 103, 571, 572) und Bestimmen eines Phasenoffsets und/oder eines Amplitudenoffsets für jeden Unterträger in dem jeweiligen Signalpfad (101, 102, 103, 571, 572) und/oder Bestimmen einer Verzögerung für den jeweiligen Signalpfad (101, 102, 103, 571, 572).

18. Verfahren gemäß Anspruch 17, das für jeden der Unterträger eine Kompensation des Phasenoffsets und/oder des Amplitudenoffsets für die Unterträger im jeweiligen Signalpfad (101, 102, 103, 571, 572) im Frequenzbereich aufweist, und eine Kompensation der Verzögerung für den jeweiligen Signalpfad (101, 102, 103, 571, 572), insbesondere, wobei die Kompensation eine Multiplikation der jeweiligen Signale in den jeweiligen Unterträgern im Frequenzbereich mit einem jeweiligen komplexen Kompensationswert ($a^t_{i,\,N}$) aufweist.

## Revendications

1. Antenne de formation de faisceau (100, 200) pour une transmission multi porteuse avec plusieurs sous-porteuses, l'antenne de formation de faisceau (100, 200) comprenant :

un certain nombre de chemins de signaux (101, 102, 103, 571, 572) configurés pour émettre et recevoir des signaux de communication,

un générateur de signaux de calibration (107, 207) qui est configuré pour générer pour les trajets de signaux (101, 102, 103, 571, 572) un certain nombre de signaux de calibration (108, 109, 110, 111, 208, 211, 308) avec les sous-porteuses de la transmission multi porteuse dans le domaine de fréquence, les signaux de calibration (108, 109, 110, 111, 208, 211, 308) comprenant un sous-signal de calibration dans au moins l'une des sous-porteuses du signal de calibration respectif (108, 109, 110, 111, 208, 211, 308), et

un élément d'alimentation (112, 113, 114, 115, 212, 213, 214) configuré pour fournir les signaux d'étalonnage (108, 109, 110, 111, 208, 211, 308) aux chemins de signaux respectifs (101, 102, 103, 571, 572) ;

**caractérisé en ce que**

lors de la génération d'un signal de calibration (108, 109, 110, 111, 208, 211, 308), le générateur de signaux de calibration (107, 207) est configuré pour générer pour chacun des sous-signaux de calibration un flux de signaux, dans lequel les flux de signaux sont des flux de signaux orthogonaux ou des flux de signaux quasi-orthogonaux mutuellement indépendants, et pour mapper les flux de signaux générés dans chaque cas à des symboles de constellation, et pour effectuer une modulation multi porteuse basée sur les symboles de constellation, et pour convertir la sortie de la modulation multi porteuse en un flux série, dans lequel le flux série représente le signal de calibration (108, 109, 110, 111, 208, 211, 308) dans le domaine temporel.

2. Antenne de formation de faisceau (100, 200) selon la revendication 1, comprenant dans chaque chemin de signal (101, 102, 103, 571, 572) un processeur de signal (215) et un émetteur-récepteur (218, 219, 220, 230) et un élément d'antenne (104, 105, 106, 204, 205, 206), dans lequel le processeur de signaux (215) est couplé à l'émetteur-récepteur respectif (218, 219, 220, 230), et l'émetteur-récepteur (218, 219, 220, 230) est couplé à l'élément d'antenne respectif (104, 105, 106, 204, 205, 206),
dans lequel le générateur de signal de calibration (107, 207) est configuré pour générer un signal de calibration dédié (108, 109, 110, 111, 208, 211, 308) pour chaque chemin de signal (101, 102, 103, 571, 572) et pour coupler le signal de calibration (108, 109, 110, 111, 208, 211, 308) dans les chemins de signal respectifs (101, 102, 103, 571, 572) via le processeur de signal (215), ou dans lequel le générateur de signal de calibration (107, 207) est configuré pour générer un signal de calibration unique (108, 109, 110, 111, 208, 211, 308) pour tous les chemins de signaux (101, 102, 103, 571, 572) et pour coupler le signal de calibration unique (108, 109, 110, 111, 208, 211, 308) dans les chemins de signaux (101, 102, 103, 571, 572), en particulier au niveau de l'élément d'antenne (104, 105, 106, 204, 205, 206) ou d'une ligne de signal entre les éléments d'antenne (104, 105, 106, 204, 205, 206) et les émetteurs-récepteurs respectifs (218, 219, 220, 230).

3. Antenne de formation de faisceau (100, 200) selon la revendication 1, dans laquelle le générateur de signaux de calibration (107, 207) est configuré pour générer les sous-signaux de calibration uniques avec un niveau de puissance prédéterminé, en particulier avec un niveau de puissance qui est égal au niveau de puissance des signaux opérationnels dans l'antenne de formation de faisceau (100, 200) ou avec un niveau de puissance qui est inférieur au niveau de puissance des signaux opérationnels dans l'antenne de formation de faisceau (100, 200), et dans lequel le générateur de signaux de calibration (107, 207) est configuré pour fournir les sous-signaux de calibration avec un niveau de puissance qui est égal au niveau de puissance des signaux opérationnels dans les sous-porteuses qui ne sont pas utilisées par les signaux opérationnels, et dans lequel le générateur de signaux de calibration (107, 207) est configuré pour fournir les sous-signaux de calibration avec un niveau de puissance qui est inférieur au niveau de puissance des signaux opérationnels dans les sous-porteuses qui sont utilisées par les signaux opérationnels.

4. Antenne de formation de faisceau (100, 200) selon la revendication 3, dans laquelle le générateur de signaux de calibration (107, 207) comprend pour chacun des flux de signaux mutuellement indépendants un générateur de sous-signaux de calibration (335, 336, 337, 435, 436, 437), en particulier un générateur de bits pseudo-aléatoires, configuré pour générer le flux de signaux respectif.

5. Antenne de formation de faisceau (100, 200) selon la revendication 3 ou 4, dans laquelle le générateur de signaux de calibration (107, 207) comprend pour chacun des flux de signaux mutuellement indépendants un mappeur de constellation (338, 339, 340, 438, 439, 440) configuré pour mapper le flux de signaux respectif en symboles de constellation respectifs.

6. Antenne de formation de faisceau (100, 200) selon l'une quelconque des revendications 3 à 5, dans laquelle le générateur de signaux de calibration (107, 207) comprend pour chacun des signaux de calibration (108, 109, 110, 111, 208, 211, 308) un modulateur multi porteuse (341, 541) configuré pour moduler en multi porteuse les flux de signaux mutuellement indépendants du signal de calibration respectif (108, 109, 110, 111, 208, 211, 308).

7. Antenne de formation de faisceau (100, 200) selon la revendication 6, dans laquelle le générateur de signaux de calibration (107, 207) comprend pour chacun des signaux de calibration (108, 109, 110, 111, 208, 211, 308) un convertisseur parallèle-série (342) configuré pour convertir la sortie du modulateur multi porteuse (341, 541) en un flux série et à sortir le flux série en tant que signal de calibration (108, 109, 110, 111, 208, 211, 308) dans le domaine temporel, et spécialement pour ajouter des préfixes cycliques au flux série avant de sortir le flux série en tant que signal de calibration (108, 109, 110, 111, 208, 211, 308).

8. Antenne de formation de faisceau (100, 200) selon l'une quelconque des revendications précédentes, comprenant pour chacun des signaux de calibration (108, 109, 110, 111, 208, 211, 308) un analyseur de signaux (228, 229, 428) configuré pour analyser les signaux de calibration (108, 109, 110, 111, 208, 211, 308) après avoir passé les chemins de signaux (101, 102, 103, 571, 572) et configuré pour déterminer pour chaque sous-porteuse dans le chemin de signal respectif (101, 102, 103, 571, 572) un décalage de phase et/ou un décalage d'amplitude, et/ou pour déterminer un retard pour le chemin de signal respectif (101, 102, 103, 571, 572).

9. Antenne de formation de faisceau (100, 200) selon la revendication 8, comprenant pour chacune des sous-porteuses un compensateur (561, 562, 567, 568) qui est configuré pour compenser dans le domaine fréquentiel le décalage de phase et/ou le décalage d'amplitude pour les sous-porteuses dans le chemin de signal respectif (101, 102, 103, 571, 572), et pour compenser le retard pour le chemin de signal respectif (101, 102, 103, 571, 572).

10. Antenne de formation de faisceau (100, 200) selon la revendication 9, dans laquelle le compensateur (561, 562, 567, 568) est configuré pour multiplier les signaux respectifs dans les sous-porteuses respectives dans le domaine fréquentiel avec une valeur de compensation complexe respective (ati, N).

11. Antenne de formation de faisceau (100, 200) selon l'une quelconque des revendications 8 à 10, dans laquelle chacun des analyseurs de signaux (228, 229, 428) comprend un convertisseur série/parallèle (445) configuré pour convertir le signal de calibration respectif (108, 109, 110, 111, 208, 211, 308) après avoir passé le chemin de signal (101, 102, 103, 571, 572) en un signal parallèle, et en particulier pour supprimer les préfixes cycliques du signal de calibration (108, 109, 110, 111, 208, 211, 308) avant de convertir le signal de calibration (108, 109, 110, 111, 208, 211, 308) en un signal parallèle.

12. Antenne de formation de faisceau (100, 200) selon l'une quelconque des revendications 8 à 11, dans laquelle chacun des analyseurs de signaux (228, 229, 428) comprend un démodulateur multi porteuse (446) configuré pour démoduler le signal de calibration respectif (108, 109, 110, 111, 208, 211, 308) après avoir passé le chemin de signal (101, 102, 103, 571, 572) et fournir des signaux de domaine de fréquence respectifs, en particulier pour démoduler le signal de calibration respectif (108, 109, 110, 111, 208, 211, 308) sur la base d'une transformation de Fourier du signal de calibration respectif (108, 109, 110, 111, 208, 211, 308).

13. Antenne de formation de faisceau (100, 200) selon l'une quelconque des revendications 8 à 12, dans laquelle chacun des analyseurs de signaux (228, 229, 428) comprend pour chacun des sous-signaux d'étalonnage un corrélateur (447, 448, 449) configuré pour corréler un signal de domaine de fréquence respectif avec le signal respectif des sous-signaux de calibration et pour déterminer le décalage de phase respectif et/ou un décalage d'amplitude sur la base du résultat de la corrélation, et/ou pour déterminer un retard pour le chemin de signal respectif (101, 102, 103, 571, 572) sur la base des résultats de la corrélation de toutes les sous-porteuses.

14. Méthode pour faire fonctionner une antenne de formation de faisceau (100, 200) avec plusieurs chemins de signal (101, 102, 103, 571, 572) pour une transmission multi porteuse avec plusieurs sous-porteuses, la méthode comprenant :

   la génération (S1) d'un sous-signal de calibration dans chacune d'un certain nombre de sous-porteuses pour un certain nombre de trajets de signaux (101, 102, 103, 571, 572) dans le domaine des fréquences,
   combiner (S2) les sous-signaux de calibration générés qui se rapportent à un seul des chemins de signaux (101, 102, 103, 571, 572) dans un signal de calibration (108, 109, 110, 111, 208, 211, 308) pour le chemin de signal respectif (101, 102, 103, 571, 572) respectivement, et
   fournir (S3) les signaux de calibration (108, 109, 110, 111, 208, 211, 308) aux chemins de signaux respectifs (101, 102, 103, 571, 572) ;
   **caractérisé en ce que**
   la génération (S1) des sous-signaux de calibration comprend la génération d'un flux de signaux pour chacun des sous-signaux de calibration, dans laquelle les flux de signaux sont des flux de signaux orthogonaux ou des flux de signaux quasi-orthogonaux mutuellement indépendants, et le mappage des flux de signaux générés dans chaque cas en symboles de constellation, et comprenant la réalisation d'une modulation multi porteuse basée sur les symboles de constellation, et la conversion de la sortie de la modulation multi porteuse en un flux série, dans lequel le flux série représente le signal de calibration (108, 109, 110, 111, 208, 211, 308) dans le domaine temporel..

15. Méthode selon la revendication 14, l'antenne de formation de faisceau (100, 200) comprenant dans chaque chemin de signal (101, 102, 103, 571, 572) un processeur de signal (215) et un émetteur-récepteur (218, 219, 220, 230) et un élément d'antenne (104, 105, 106, 204, 205, 206), dans lequel le processeur de signaux (215) est couplé à l'émetteur-récepteur respectif (218, 219, 220, 230), et l'émetteur-récepteur (218, 219, 220, 230) est couplé à l'élément d'antenne respectif (104, 105, 106, 204, 205, 206), la méthode comprenant les étapes suivantes

   générer un signal de calibration dédié (108, 109, 110, 111, 208, 211, 308) pour chaque chemin de signal (101, 102, 103, 571, 572) et coupler le signal de calibration (108, 109, 110, 111, 208, 211, 308) dans les chemins de signal respectifs (101, 102, 103, 571, 572) via le processeur de signal (215), ou

générer un signal de calibration unique (108, 109, 110, 111, 208, 211, 308) pour tous les chemins de signaux (101, 102, 103, 571, 572) et coupler le signal de calibration unique (108, 109, 110, 111, 208, 211, 308) dans les chemins de signaux (101, 102, 103, 571, 572), en particulier au niveau de l'élément d'antenne (104, 105, 106, 204, 205, 206) ou d'une ligne de signal entre les éléments d'antenne (104, 105, 106, 204, 205, 206) et les émetteurs-récepteurs respectifs (218, 219, 220, 230).

16. Méthode selon l'une quelconque des revendications précédentes 14 et 15, comprenant lors de la génération des sous-signaux de calibration la génération des sous-signaux de calibration uniques avec un niveau de puissance prédéterminé, en particulier avec un niveau de puissance qui est égal au niveau de puissance des signaux opérationnels dans l'antenne de formation de faisceau (100, 200) et/ou avec un niveau de puissance qui est inférieur au niveau de puissance des signaux opérationnels dans l'antenne de formation de faisceau (100, 200), et dans lequel les sous-signaux de calibration avec un niveau de puissance qui est égal au niveau de puissance des signaux opérationnels sont fournis pour des sous-porteuses qui ne sont pas utilisées par des signaux opérationnels, et dans lequel les sous-signaux de calibration avec un niveau de puissance qui est inférieur au niveau de puissance des signaux opérationnels sont fournis pour des sous-porteuses qui sont utilisées par des signaux opérationnels.

17. Méthode selon l'une quelconque des revendications précédentes 14 à 16, comprenant pour chacun des signaux de calibration (108, 109, 110, 111, 208, 211, 308) l'analyse du signal de calibration respectif (108, 109, 110, 111, 208, 211, 308) après avoir passé le chemin de signal respectif (101, 102, 103, 571, 572) et déterminer pour chaque sous-porteuse dans le chemin de signal respectif (101, 102, 103, 571, 572) un décalage de phase et/ou un décalage d'amplitude, et/ou déterminer un retard pour le chemin de signal respectif (101, 102, 103, 571, 572).

18. Méthode selon la revendication 17, comprenant pour chacune des sous-porteuses la compensation dans le domaine des fréquences du décalage de phase et/ou du décalage d'amplitude pour les sous-porteuses dans le chemin de signal respectif (101, 102, 103, 571, 572), et la compensation du retard pour le chemin de signal respectif (101, 102, 103, 571, 572), en particulier, dans laquelle la compensation comprend la multiplication des signaux respectifs dans les sous-porteuses respectives dans le domaine des fréquences avec une valeur de compensation complexe respective (ati, N).

Fig. 1

EP 3 734 865 B1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008310529 A1
- US 2006111050 A1